(19) Europäisches Patentamt
European Patent Office
Office européen des brevets

(11) **EP 4 718 794 A1**

(12) **EUROPEAN PATENT APPLICATION**
published in accordance with Art. 153(4) EPC

(43) Date of publication:
**01.04.2026 Bulletin 2026/14**

(21) Application number: **24838627.8**

(22) Date of filing: **29.06.2024**

(51) International Patent Classification (IPC):
**H04L 27/00** (2006.01)

(52) Cooperative Patent Classification (CPC):
**H04L 1/00; H04L 5/00; H04L 27/00; H04L 27/36**

(86) International application number:
**PCT/CN2024/102756**

(87) International publication number:
**WO 2025/011372 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.07.2023 CN 202310835653**

(71) Applicant: **Huawei Technologies Co., Ltd.**
**Shenzhen, Guangdong 518129 (CN)**

(72) Inventors:
• **GONG, Bo**
  **Shenzhen, Guangdong 518129 (CN)**
• **YU, Jian**
  **Shenzhen, Guangdong 518129 (CN)**
• **HU, Mengshi**
  **Shenzhen, Guangdong 518129 (CN)**
• **GAN, Ming**
  **Shenzhen, Guangdong 518129 (CN)**
• **RUAN, Wei**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57)     A communication method and apparatus are provided, are applied to the field of communication technologies, may be applied to a wireless local area network system supporting 802.11 series protocols such as a next-generation Wi-Fi protocol of IEEE 802.11ax like 802.11be, Wi-Fi 7, or EHT, and 802.11bn, Wi-Fi 8, UHR, Wi-Fi AI, or millimeter wave (MMW), and may be further applied to a WPAN system, a sensing system, and the like supporting UWB. A first communication apparatus generates a PPDU, and sends the PPDU. A second communication apparatus receives the PPDU, and parses the PPDU. The PPDU includes first indication information. The first indication information may indicate a first modulation scheme set and a coding rate. The first modulation scheme set is one of N modulation scheme sets obtained through classification based on W modulation schemes. Q modulation schemes in the first modulation scheme set are used to modulate the PPDU.

FIG. 2b

## Description

This application claims priority to Chinese Patent Application No. 202310835653.0, filed with the China National Intellectual Property Administration on July 7, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

Wireless local area networks (wireless local area networks, WLANs) start from 802.11a, 802.11b, or 802.11g, and evolve from 802.11n, 802.11ac, 802.11ax, and 802.11be. 802.11a, 802.11b, and 802.11g support single spatial stream non multiple-input multiple-output (multiple input multiple output, MIMO) transmission. 802.11n supports MIMO of a maximum of four space-time streams. For all the space-time streams, a same coding scheme and a same coding rate are used, but different modulation schemes may be used, to adapt to signal-to-noise ratios (signal to noise ratios, SNRs) of different space-time streams, thereby improving a transmission throughput. This manner is referred to as unequal (or non-uniform) modulation (unequal modulation, UEQM).

802.11ac, 802.11ax, and 802.11be support a maximum of eight spatial streams. A space-time stream (space-time stream) is a space-time block coding (space-time block coding, STBC) multi-stream transmission technology. The space-time stream is referred to as a spatial stream when a transmit end does not use the STBC multi-stream transmission technology. The 802.11be standard abandons the STBC multi-stream transmission technology, and retains the concept of the spatial stream. As a number of antennas of commercial devices increases, more devices use two antennas, or even four antennas or eight antennas. Access points (access points, APs) and non-AP stations (non-AP Stations, non-AP STAs) (generally terminals) can perform MIMO communication with a larger number of spatial streams by using more antennas. As a number of spatial streams increases, the non-uniform modulation becomes more important. Therefore, more numbers of spatial streams and more modulation schemes and coding schemes need to be considered.

Therefore, how to indicate the non-uniform modulation is an issue that is being studied by persons skilled in the art.

## SUMMARY

Embodiments of this application provide a communication method and apparatus, to indicate different modulation schemes by using a small number of bits, thereby indicating non-uniform modulation.

According to a first aspect, an embodiment of this application provides a communication method. The method is applied to a first communication apparatus. The first communication apparatus is a Wi-Fi device, a Wi-Fi chip, a functional module, or the like. The method includes:

the first communication apparatus generates a physical (physical, PHY) protocol data unit (PHY protocol data unit, PPDU), where the PPDU includes first indication information, the first indication information indicates Q modulation schemes in W modulation schemes, a difference between numbers of modulation bits of modulation symbols of any two modulation schemes in the Q modulation schemes is less than a first value, the W modulation schemes include at least one of the following: 4096 quadrature amplitude modulation (quadrature amplitude modulation, QAM), 1024QAM, 256QAM, and binary phase shift keying (binary phase shift keying, BPSK)-dual carrier modulation (dual carrier modulation, DCM) BPSK-DCM, and Q is a positive integer less than W; and the first communication apparatus sends the PPDU.

In this embodiment of this application, a difference between numbers of modulation bits of modulation symbols of any two modulation schemes in the Q modulation schemes is less than the first value. This can effectively limit occurrence of a modulation scheme with an excessively high order and a modulation scheme with an excessively low order in the Q adjacent modulation schemes. Generally, a difference between SNRs of spatial streams on a channel is limited, and adaptation to both the modulation scheme with the excessively low order and the modulation scheme with the excessively high order is not required. Therefore, a difference between numbers of modulation bits of modulation symbols of any two modulation schemes in the Q modulation schemes is less than the first value. This can implement modulation of the PPDU by the first communication apparatus by using a non-uniform modulation scheme, ensure a throughput, further reduce a number of combinations of modulation schemes in non-uniform modulation, simplify a protocol, and implement implementation simplicity.

According to a second aspect, an embodiment of this application provides a communication method. The method is applied to a second communication apparatus. The second communication apparatus is a Wi-Fi device, a Wi-Fi chip, a functional module, or the like. The method includes:

the second communication apparatus receives a physical protocol data unit PPDU, where the PPDU includes first indication information, the first indication information indicates Q modulation schemes in W modulation schemes, a difference between numbers of modulation bits of modulation symbols of any two modulation schemes in the Q modulation schemes is less than a first value, the W modulation schemes include at least one of the following: 4096 quadrature amplitude modulation QAM, 1024QAM, 256QAM, and binary phase shift keying-dual carrier modulation BPSK-DCM, and Q is a positive integer less than W; and the second communication apparatus parses the PPDU.

With reference to the first aspect or the second aspect, in a possible implementation, the first indication information indicates the second communication apparatus to demodulate the PPDU based on the Q modulation schemes.

With reference to the first aspect or the second aspect, in a possible implementation, the W modulation schemes further include at least one of the following: 64QAM, 16QAM, quadrature phase shift keying (quadrature phase shift keying, QPSK), and BPSK.

With reference to the first aspect or the second aspect, in a possible implementation, the W modulation schemes include 4096QAM, 1024QAM, 256QAM, 64QAM, 16QAM, QPSK, BPSK, and BPSK-DCM.

With reference to the first aspect or the second aspect, in a possible implementation, the first value is 10, or the first value is 8.

With reference to the first aspect or the second aspect, in a possible implementation, the W modulation schemes are classified into N modulation scheme sets. Each modulation scheme set includes K adjacent modulation schemes. The N modulation scheme sets include a first modulation scheme set. The K adjacent modulation schemes in the first modulation scheme set include the Q modulation schemes, and Q is less than or equal to K.

In this embodiment of this application, the first communication apparatus can modulate the PPDU by using the Q modulation schemes in the first modulation scheme set. Correspondingly, the second communication apparatus can demodulate the PPDU by using the Q modulation schemes in the first modulation scheme set.

With reference to the first aspect or the second aspect, in a possible implementation, the first indication information further indicates a coding rate corresponding to the Q modulation schemes.

In this embodiment of this application, the first indication information can indicate the Q modulation schemes, and can further indicate the coding rate. Therefore, the first communication apparatus can modulate the PPDU by using the Q modulation schemes in the first modulation scheme set, and encode the PPDU by using the coding rate. Correspondingly, the second communication apparatus can demodulate the PPDU by using the Q modulation schemes, and decode the PPDU by using the coding rate.

With reference to the first aspect or the second aspect, in a possible implementation, the first indication information further indicates a spatial stream corresponding to each of the Q modulation schemes.

With reference to the first aspect or the second aspect, in a possible implementation, the first indication information includes a modulation and coding scheme MCS index, and the MCS index indicates at least one of the coding rate or the spatial streams corresponding to the Q modulation schemes.

In this embodiment of this application, the first indication information can indicate, by carrying the MCS index, the Q modulation schemes and the spatial streams corresponding to the schemes, to indicate the Q modulation schemes and the spatial streams by using as few bits as possible, thereby effectively reducing bit overheads.

With reference to the first aspect or the second aspect, in a possible implementation, the first indication information includes T bits. A value of the T bits is a modulation and coding scheme MCS index. The MCS index indicates the first modulation scheme set and a coding rate corresponding to the first modulation scheme set; or the MCS index indicates one modulation scheme in the first modulation scheme set and the coding rate corresponding to the first modulation scheme set.

With reference to the first aspect or the second aspect, in a possible implementation, that the MCS index indicates the one modulation scheme in the first modulation scheme set includes: K=2, and the MCS index indicates a highest-order modulation scheme in the first modulation scheme set or a lowest-order modulation scheme in the first modulation scheme set; or K=3, and the MCS index indicates a highest-order modulation scheme in the first modulation scheme set, or an intermediate-order modulation scheme in the first modulation scheme set, or a lowest-order modulation scheme in the first modulation scheme set; or K=4, and the MCS index indicates a highest-order modulation scheme in the first modulation scheme set, or a second-highest-order modulation scheme in the first modulation scheme set, or a third-highest-order modulation scheme in the first modulation scheme set, or a lowest-order modulation scheme in the first modulation scheme set.

With reference to the first aspect or the second aspect, in a possible implementation, the first indication information further indicates an index of a spatial stream corresponding to a modulation scheme in the first modulation scheme set.

With reference to the first aspect or the second aspect, in a possible implementation, the first indication information further includes K spatial stream indication fields. The K spatial stream indication fields include a first spatial stream indication field. The first spatial stream indication field indicates an index of a spatial stream corresponding to a first modulation scheme. The first modulation scheme is one of the K adjacent modulation schemes.

With reference to the first aspect or the second aspect, in a possible implementation, a value carried in the first spatial stream indication field is $S_i$. $S_i$ represents a maximum index of the spatial stream corresponding to the first modulation scheme. $S_i$ is an integer greater than or equal to 0 and less than or equal to $N_{ss}-1$. $N_{ss}$ is a total number of spatial streams, and i is an integer greater than or equal to 0 and less than or equal to K-1. The index of the spatial stream corresponding to the first modulation scheme is less than or equal to $S_i$; or the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$.

With reference to the first aspect or the second aspect, in a possible implementation, the first indication information further indicates a number of spatial streams corresponding to a modulation scheme in the first modulation scheme set.

With reference to the first aspect or the second aspect, in a possible implementation, the first indication information further includes K spatial stream indication fields. The K spatial stream indication fields include a first spatial stream indication field. The first spatial stream indication field indicates a number of spatial streams of a first modulation scheme. The first modulation scheme is one of the K adjacent modulation schemes.

With reference to the first aspect or the second aspect, in a possible implementation, a value carried in the first spatial stream indication field is $S_i$. $S_i$ represents the number of spatial streams corresponding to the first modulation scheme. $S_i$ is an integer greater than or equal to 0 and less than or equal to $N_{ss-1}$. $N_{ss}$ is a total number of spatial streams, and i is an integer greater than or equal to 0 and less than or equal to K-1.

With reference to the first aspect or the second aspect, in a possible implementation, the first indication information further includes information about Nss and K-1 spatial stream indication fields. The K-1 spatial stream indication fields include a first spatial stream indication field. The first spatial stream indication field indicates an index of a spatial stream of a first modulation scheme. The first modulation scheme is one of the K adjacent modulation schemes other than a lowest-order modulation scheme. Nss represents a total number of spatial streams.

With reference to the first aspect or the second aspect, in a possible implementation, a value carried in the first spatial stream indication field is $S_i$. $S_i$ represents a maximum index of the spatial stream corresponding to the first modulation scheme. $S_i$ is an integer greater than or equal to 0 and less than or equal to $N_{ss}-1$. $N_{ss}$ is the total number of spatial streams, and i is an integer greater than or equal to 0 and less than or equal to K-2. The index of the spatial stream corresponding to the first modulation scheme is less than or equal to $S_i$; or the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$.

With reference to the first aspect or the second aspect, in a possible implementation, the first indication information further includes information about Nss and K-1 spatial stream indication fields. The K-1 spatial stream indication fields include a first spatial stream indication field. The first spatial stream indication field indicates a number of spatial streams of a first modulation scheme. The first modulation scheme is one of the K adjacent modulation schemes other than a lowest-order modulation scheme. Nss represents a total number of spatial streams.

With reference to the first aspect or the second aspect, in a possible implementation, a value carried in the first spatial stream indication field is $S_i$. $S_i$ represents the number of spatial streams corresponding to the first modulation scheme. $S_i$ is an integer greater than or equal to 0 and less than or equal to $N_{ss}-1$, $N_{ss}$ is the total number of spatial streams, and i is an integer greater than or equal to 0 and less than or equal to K-2.

With reference to the first aspect or the second aspect, in a possible implementation, rankings of modulation schemes corresponding to the K spatial stream indication fields successively correspond to rankings of the K adjacent modulation schemes in the first modulation scheme set; or rankings of modulation schemes corresponding to the K-1 spatial stream indication fields successively correspond to rankings of K-1 adjacent modulation schemes in the first modulation scheme set, and the K-1 adjacent modulation schemes are K-1 modulation schemes other than the lowest-order modulation scheme in the first modulation scheme set.

With reference to the first aspect or the second aspect, in a possible implementation, the Q modulation schemes are Q modulation schemes in K adjacent modulation schemes, K=3, and Q=1, or Q=2, or Q=3

With reference to the first aspect or the second aspect, in a possible implementation, the Q modulation schemes are Q modulation schemes in K adjacent modulation schemes, K=3, and Q=1, or Q=2, or Q=3; and the K adjacent modulation schemes are any one of the following:

{QPSK, BPSK, BPSK-DCM};
{16QAM, QPSK, BPSK};
{64QAM, 16QAM, QPSK};
{256QAM, 64QAM, 16QAM};
{1024QAM, 256QAM, 64QAM}; and

{4096QAM, 1024QAM, 256QAM}.

With reference to the first aspect or the second aspect, in a possible implementation, Q=2, and the Q modulation schemes are any one of the following:

{BPSK, BPSK-DCM};
{QPSK, BPSK-DCM};
{QPSK, BPSK};
{16QAM, BPSK};
{16QAM, QPSK};
{64QAM, QPSK};
{64QAM, 16QAM};
{256QAM, 16QAM};
{256QAM, 64QAM};
{1024QAM, 64QAM};
{1024QAM, 256QAM};
{4096QAM, 256QAM}; and
{4096QAM, 1024QAM}.

With reference to the first aspect or the second aspect, in a possible implementation, Q=3, and the Q modulation schemes are any one of the following:

{QPSK, BPSK, BPSK-DCM};
{16QAM, QPSK, BPSK};
{64QAM, 16QAM, QPSK};
{256QAM, 64QAM, 16QAM};
{1024QAM, 256QAM, 64QAM}; and
{4096QAM, 1024QAM, 256QAM}.

With reference to the first aspect or the second aspect, in a possible implementation, a difference between a number of modulation bits of a modulation symbol of a highest-order modulation scheme and a number of modulation bits of a modulation symbol of a lowest-order modulation scheme in the K adjacent modulation schemes is less than or equal to 4.

According to a third aspect, an embodiment of this application provides a communication method. The method includes:

a first communication apparatus generates a physical protocol data unit PPDU, where the PPDU includes first indication information, the first indication information indicates a first modulation scheme set and a coding rate corresponding to the first modulation scheme set, the first modulation scheme set is one of N modulation scheme sets, the N modulation scheme sets are obtained through division based on K adjacent modulation schemes in the following modulation schemes: 4096 quadrature amplitude modulation QAM, 1024QAM, 256QAM, 64QAM, 16QAM, quadrature phase shift keying QPSK, binary phase shift keying BPSK, and binary phase shift keying-dual carrier modulation BPSK-DCM, Q modulation schemes in the K adjacent modulation schemes in the first modulation scheme set are used to modulate the PPDU, the PPDU is encoded based on the coding rate, Q is less than or equal to K, and N, Q, and K are all positive integers; and the first communication apparatus sends the PPDU.

In this embodiment of this application, when the first communication apparatus and the second communication apparatus support more modulation schemes, for example, support 4096QAM, 1024QAM, 256QAM, 64QAM, 16QAM, QPSK, BPSK, and BPSK-DCM, the first communication apparatus can flexibly indicate the first modulation scheme set and the coding rate by using the first indication information. Therefore, the first modulation scheme set and the coding rate can be indicated by using fewer bits, and non-uniform modulation can be flexibly supported, to ensure a throughput.

According to a fourth aspect, an embodiment of this application provides a communication method. The method includes:

a second communication apparatus receives a physical protocol data unit PPDU, where the PPDU includes first indication information, the first indication information indicates a first modulation scheme set and a coding rate corresponding to the first modulation scheme set, the first modulation scheme set is one of N modulation scheme sets, the N modulation scheme sets are obtained through division based on K adjacent modulation schemes in the following modulation schemes: 4096 quadrature amplitude modulation QAM, 1024QAM, 256QAM, 64QAM, 16QAM, quadrature phase shift keying QPSK, binary phase shift keying BPSK, and binary phase shift keying-dual carrier modulation BPSK-DCM, Q modulation schemes in the K adjacent modulation schemes in the first modulation scheme set are used to modulate the PPDU, the PPDU is encoded based on the coding rate, Q is less than or equal to K, and N, Q, and K are all positive integers; and the second communication apparatus parses the PPDU.

With reference to the third aspect or the fourth aspect, in a possible implementation, each of the N modulation scheme sets includes the K adjacent modulation schemes.

With reference to the third aspect or the fourth aspect, in a possible implementation, the first modulation scheme set is any one of the following: {BPSK, BPSK-DCM}; {QPSK, BPSK}; {16QAM, QPSK}; {64QAM, 16QAM}; {256QAM, 64QAM}; {1024QAM, 256QAM}; and {4096QAM, 1024QAM}; or

the first modulation scheme set is any one of the following: {QPSK, BPSK, BPSK-DCM}; {16QAM, QPSK, BPSK}; {64QAM, 16QAM, QPSK}; {256QAM, 64QAM, 16QAM}; {1024QAM, 256QAM, 64QAM}; and {4096QAM, 1024QAM, 256QAM}; or
the first modulation scheme set is any one of the following: {16QAM, QPSK, BPSK, BPSK-DCM}; {64QAM, 16QAM, QPSK, BPSK}; {256QAM, 64QAM, 16QAM, QPSK}; {1024QAM, 256QAM, 64QAM, 16QAM}; and {4096QAM, 1024QAM, 256QAM, 64QAM}.

With reference to the third aspect or the fourth aspect, in a possible implementation, the first indication information includes T bits. A value of the T bits is a modulation and coding scheme (modulation and coding Scheme, MCS) index (index); and the MCS index indicates the first modulation scheme set and the coding rate corresponding to the first modulation scheme set; or the MCS index indicates one modulation scheme in the first modulation scheme set and the coding rate corresponding to the first modulation scheme set.

In this embodiment of this application, the first indication information indicates, by carrying the MCS index of the one modulation scheme, the first modulation scheme set and the coding rate corresponding to the first modulation scheme set, to indicate the first modulation scheme set and the coding rate by using as few bits as possible, thereby effectively reducing bit overheads.

With reference to the third aspect or the fourth aspect, in a possible implementation, that the MCS index indicates the one modulation scheme in the first modulation scheme set includes: K=2, and the MCS index indicates a highest-order modulation scheme in the first modulation scheme set or a lowest-order modulation scheme in the first modulation scheme set; or K=3, and the MCS index indicates a highest-order modulation scheme in the first modulation scheme set, or an intermediate-order modulation scheme in the first modulation scheme set, or a lowest-order modulation scheme in the first modulation scheme set; or K=4, and the MCS index indicates a highest-order modulation scheme in the first modulation scheme set, or a second-highest-order modulation scheme in the first modulation scheme set, or a third-highest-order modulation scheme in the first modulation scheme set, or a lowest-order modulation scheme in the first modulation scheme set.

With reference to the third aspect or the fourth aspect, in a possible implementation, the PPDU further includes second indication information. The second indication information indicates an index of a spatial stream corresponding to a modulation scheme in the first modulation scheme set within which the Q modulation schemes fall.

With reference to the third aspect or the fourth aspect, in a possible implementation, the second indication information includes K spatial stream indication fields. The K spatial stream indication fields include a first spatial stream indication field. The first spatial stream indication field indicates an index of a spatial stream of a first modulation scheme. The first modulation scheme is one of the K adjacent modulation schemes.

With reference to the third aspect or the fourth aspect, in a possible implementation, a value carried in the first spatial stream indication field is $S_i$. $S_i$ represents a maximum index of the spatial stream corresponding to the first modulation scheme. $S_i$ is an integer greater than or equal to 0 and less than or equal to $N_{ss}-1$. $N_{ss}$ is a total number of spatial streams, and i is an integer greater than or equal to 0 and less than or equal to K-1. The index of the spatial stream corresponding to the first modulation scheme is less than or equal to $S_i$; or the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$.

With reference to the third aspect or the fourth aspect, in a possible implementation, the PPDU further includes second indication information. The second indication information indicates a number of spatial streams corresponding to a modulation scheme in the first modulation scheme set within which the Q modulation schemes fall.

With reference to the third aspect or the fourth aspect, in a possible implementation, the second indication information includes K spatial stream indication fields. The K spatial stream indication fields include a first spatial stream indication field. The first spatial stream indication field indicates a number of spatial streams of a first modulation scheme. The first modulation scheme is one of the K adjacent modulation schemes.

With reference to the third aspect or the fourth aspect, in a possible implementation, a value carried in the first spatial stream indication field is $S_i$. $S_i$ represents the number of spatial streams corresponding to the first modulation scheme. $S_i$ is an integer greater than or equal to 0 and less than or equal to $N_{ss}-1$. $N_{ss}$ is a total number of spatial streams, and i is an integer greater than or equal to 0 and less than or equal to K-1.

With reference to the third aspect or the fourth aspect, in a possible implementation, the second indication information includes information about Nss and K-1 spatial stream indication fields. The K-1 spatial stream indication fields include a first spatial stream indication field. The first spatial stream indication field indicates an index of a spatial stream of a first modulation scheme. The first modulation scheme is one of the K adjacent modulation schemes other than a lowest-order modulation scheme. Nss represents a total number of spatial streams.

With reference to the third aspect or the fourth aspect, in a possible implementation, a value carried in the first spatial stream indication field is $S_i$. $S_i$ represents a maximum index of the spatial stream corresponding to the first modulation scheme. $S_i$ is an integer greater than or equal to 0 and less than or equal to $N_{ss}$-1. $N_{ss}$ is the total number of spatial streams, and i is an integer greater than or equal to 0 and less than or equal to K-2. The index of the spatial stream corresponding to the first modulation scheme is less than or equal to $S_i$; or the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$.

With reference to the third aspect or the fourth aspect, in a possible implementation, the second indication information includes information about Nss and K-1 spatial stream indication fields. The K-1 spatial stream indication fields include a first spatial stream indication field. The first spatial stream indication field indicates a number of spatial streams of a first modulation scheme. The first modulation scheme is one of the K adjacent modulation schemes other than a lowest-order modulation scheme. Nss represents a total number of spatial streams.

With reference to the third aspect or the fourth aspect, in a possible implementation, a value carried in the first spatial stream indication field is $S_i$. $S_i$ represents the number of spatial streams corresponding to the first modulation scheme. $S_i$ is an integer greater than or equal to 0 and less than or equal to $N_{ss}$-1, $N_{ss}$ is the total number of spatial streams, and i is an integer greater than or equal to 0 and less than or equal to K-2.

With reference to the third aspect or the fourth aspect, in a possible implementation, rankings of the K spatial stream indication fields successively correspond to rankings of the K adjacent modulation schemes in the set within which the Q modulation schemes fall; or rankings of the K-1 spatial stream indication fields successively correspond to rankings of K-1 adjacent modulation schemes in the set within which the Q modulation schemes fall, and the K-1 adjacent modulation schemes are K-1 modulation schemes other than a lowest-order modulation scheme in the set within which the Q modulation schemes fall.

With reference to the third aspect or the fourth aspect, in a possible implementation, the first indication information and the second indication information are carried in a user field in the PPDU.

According to a fifth aspect, an embodiment of this application provides a first communication apparatus, configured to perform the method according to any one of the first aspect, the third aspect, or the possible implementations thereof. The first communication apparatus includes a unit that performs the method according to any one of the first aspect, the third aspect, or the possible implementations thereof.

According to a sixth aspect, an embodiment of this application provides a second communication apparatus, configured to perform the method according to any one of the second aspect, the fourth aspect, or the possible implementations thereof. The second communication apparatus includes a unit that performs the method according to any one of the second aspect, the fourth aspect, or the possible implementations thereof.

According to a seventh aspect, an embodiment of this application provides a first communication apparatus. The first communication apparatus includes a processor, configured to perform the method according to any one of the first aspect, the third aspect, or the possible implementations thereof. The processor is configured to execute a program stored in a memory. When the program is executed, the method according to any one of the first aspect, the third aspect, or the possible implementations thereof is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated. For example, the first communication apparatus may be a chip.

In a possible implementation, the first communication apparatus further includes a transceiver. The transceiver is configured to receive information or send information.

According to an eighth aspect, an embodiment of this application provides a second communication apparatus. The second communication apparatus includes a processor, configured to perform the method according to any one of the second aspect, the fourth aspect, or the possible implementations thereof. The processor is configured to execute a program stored in a memory. When the program is executed, the method according to any one of the second aspect, the fourth aspect, or the possible implementations thereof is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated. For example, the second communication apparatus may be a chip.

In a possible implementation, the second communication apparatus further includes a transceiver. The transceiver is configured to receive information or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method according to any one of the first aspect, the third aspect, or the possible implementations thereof.

In a possible implementation, that the interface is configured to output the information includes: The interface is configured to output a PPDU. For example, the logic circuit is configured to generate the PPDU.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to any one of the second aspect, the fourth aspect, or the possible implementations thereof.

In a possible implementation, that the interface is configured to input the information includes: The interface is configured to input a PPDU. For example, the logic circuit is configured to parse the PPDU.

According to an eleventh aspect, an embodiment of this application provides a computer-readable storage medium. The computer-readable storage medium is configured to store a computer program. When the computer program is run on a computer, the method according to any one of the first aspect, the second aspect, the third aspect, the fourth aspect, or the possible implementations thereof is performed.

According to a twelfth aspect, an embodiment of this application provides a computer program product. The computer program product includes a computer program or computer code. When the computer program product runs on a computer, the method according to any one of the first aspect, the second aspect, the third aspect, the fourth aspect, or the possible implementations thereof is performed.

According to a thirteenth aspect, an embodiment of this application provides a computer program. When the computer program is run on a computer, the method according to any one of the first aspect, the second aspect, the third aspect, the fourth aspect, or the possible implementations thereof is performed.

According to a fourteenth aspect, an embodiment of this application provides a communication system. The communication system includes a first communication apparatus and a second communication apparatus.

In a possible implementation, the first communication apparatus is configured to perform the method according to any one of the first aspect or the possible implementations of the first aspect. The second communication apparatus is configured to perform the method according to any one of the second aspect or possible implementations of the second aspect.

In another possible implementation, the first communication apparatus is configured to perform the method according to any one of the third aspect or the possible implementations of the third aspect. The second communication apparatus is configured to perform the method according to any one of the fourth aspect or possible implementations of the fourth aspect.

## BRIEF DESCRIPTION OF DRAWINGS

FIG. 1 is a diagram of an architecture of a communication system according to an embodiment of this application;

FIG. 2a is a schematic flowchart of a communication method according to an embodiment of this application;

FIG. 2b is a schematic flowchart of a communication method according to an embodiment of this application;

FIG. 3 is a diagram of distribution of output SNRs when an input SNR of a 4T4R channel is 25 dB according to an embodiment of this application;

FIG. 4a and FIG. 4b are diagrams of formats of first indication information according to an embodiment of this application;

FIG. 5a to FIG. 5d are diagrams of formats of first indication information according to an embodiment of this application;

FIG. 6a to FIG. 6d are diagrams of formats of first indication information according to an embodiment of this application;

FIG. 7a and FIG. 7b are diagrams of formats of a PPDU according to an embodiment of this application;

FIG. 8a and FIG. 8b are diagrams of formats of a first SIG field according to an embodiment of this application; and

FIG. 9 to FIG. 11 are diagrams of structures of a communication apparatus according to an embodiment of this application.

## DESCRIPTION OF EMBODIMENTS

For ease of understanding technical solutions in this application, the following further describes this application with reference to accompanying drawings.

The terms "first", "second", and the like in the specification, claims, and accompanying drawings of this application are merely intended to distinguish between different objects, but do not indicate a specific sequence. In addition, the terms "including" and "having" and any variants thereof are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

An "embodiment" mentioned in this specification means that a specific feature, structure, or characteristic described with reference to the embodiment may be included in at least one embodiment of this application. The phrase shown at locations in this specification may not necessarily mean a same embodiment, and is not an independent or optional embodiment exclusive from another embodiment. It may be explicitly and implicitly understood by persons skilled in the art that embodiments described in this specification may be combined with another embodiment.

In this application, "at least one" means one or more, "a plurality of" means two or more, "at least two" means two, three, or more, and "and/or" is used to describe an association relationship between associated objects, and indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between associated objects. "At least one of the following items" or a similar expression thereof means any combination of these items. For example, at least one of a, b, or c may indicate a, b, c, "a and b", "a and c", "b and c", or "a, b, and c".

Embodiments of this application provide a communication apparatus and apparatus. The method can indicate different modulation schemes by using a small number of bits, to indicate a non-uniform modulation scheme. For example, embodiments of this application are applicable to a plurality of spatial streams and a plurality of modulation schemes, for example, the non-uniform modulation scheme, to effectively simplify a protocol and implement implementation simplicity.

The following describes a communication system in embodiments of this application.

The technical solutions provided in embodiments of this application may be applied to a WLAN system, for example, Wi-Fi. For example, the method provided in embodiments of this application is applicable to IEEE 802.11 series protocols, for example, an 802.11a/b/g protocol, an 802.11n protocol, an 802.11ac protocol, an 802.11ax protocol, an 802.11 be protocol, an 802.11bn protocol, or a next-generation protocol. Details are not enumerated. The technical solutions provided in embodiments of this application may be further applied to a wireless personal area network (wireless personal area network, WPAN) based on millimeter wave (millimeter wave, MMW) and ultra-wideband (ultra-wideband, UWB) technologies. For example, the method provided in embodiments of this application is applicable to IEEE 802.15 series protocols, for example, an 802.15.4a protocol, an 802.15.4z protocol, an 802.15.4ab protocol, or a future specific-generation UWB WPAN protocol. Details are not enumerated. The technical solutions provided in embodiments of this application may be further applied to the following communication systems, for example, an internet of things (internet of things, IoT) system, an internet of vehicles (vehicle to X, V2X), a narrowband internet of things (narrowband internet of things, NB-IoT) system, a long term evolution (long term evolution, LTE) system, a 5th-generation (5th-generation, 5G) communication system, and a new communication system emerging in future communication development.

The WLAN system can provide high-speed and low-latency transmission. With continuous evolution of WLAN application scenarios, the WLAN system is to be used in more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an augmented reality (augmented reality, AR) wearable device or a virtual reality (virtual reality, VR) wearable device), a smart device (for example, a printer, a projector, a loudspeaker, or a speaker) in smart office, an internet of vehicle device in an internet of vehicle, infrastructure (for example, a vending machine, a self-service navigation console of a supermarket, a self-service cash register device, or a self-service ordering machine) in a daily life scenario, a device in a large sports and music venue, or the like.

Although embodiments of this application mainly use a WLAN as an example, embodiments of this application are especially applied to a network according to IEEE 802.11 series standards. Embodiments of this application can support Wi-Fi 8 that may also be referred to as ultra-high reliability (ultra-high reliability, UHR) or ultra-high reliability and throughput (ultra-high reliability and throughput, UHRT). Details are not enumerated herein. Aspects in embodiments of this application may be extended to another network using various standards or protocols, for example, Bluetooth (Bluetooth), a high performance radio LAN (high performance radio LAN, HIPERLAN) (a wireless standard similar to an IEEE 802.11 standard, mainly used in Europe), a wide area network (wide area network, WAN), or another network known currently or developed in the future.

In a possible implementation, the method provided in embodiments of this application may be implemented by a communication apparatus in a communication system. For example, the communication apparatus may be an access point (access point, AP) or a station (station, STA).

The AP is an apparatus having a wireless communication function, supports communication or sensing by using a WLAN protocol, has a function of communicating with or sensing another device (for example, a non-AP STA or another access point) in a WLAN network, and certainly may further have a function of communicating with or sensing another device. Alternatively, the access point is equivalent to a bridge that connects a wired network to a wireless network. A main function of the access point is to connect wireless network clients together and then connect the wireless network to an ethernet. In the WLAN system, the access point may be referred to as an access point station (AP STA). The apparatus having the wireless communication function may be an entire device, or may be a chip, a processing system, a functional module, or the like installed in the entire device. The device in which the chip, the processing system, or the functional module is installed may implement the method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to 100-odd meters. Certainly, the access point may alternatively be deployed outdoors. For another example, the AP may be a communication entity like a communication server, a router, a switch, or a bridge. The AP may include a macro base station, a micro base station, a relay station, and the like that are in various forms. Certainly, the AP may alternatively be a chip, a processing system, or a module in the foregoing devices in the various forms, to implement the method and the function in embodiments of this application.

The STA is an apparatus having a wireless communication function, supports communication or sensing by using the WLAN protocol, and has a capability of communicating with or sensing another non-AP STA or access point in the WLAN network. In the WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like installed in the entire device. The device in which the chip, the processing system, or the functional module is installed may implement the method and the function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in the various forms, to implement the method and the function in embodiments of this application.

For example, a communication system to which the method provided in embodiments of this application may be applied may include the access point and the station. For example, embodiments of this application are applicable to a scenario of communication or sensing between the AP and the STA, between APs, or between STAs in the WLAN. This is not limited in embodiments of this application. Optionally, the AP may communicate with or sense a single STA, or the AP may simultaneously communicate with or sense a plurality of STAs. Specifically, the communication or the sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between the AP and the STA, between the APs, and between the STAs. The communication protocol may include IEEE 802.11 series protocols, for example, is applicable to the 802.11n/802.11ac/802.11ax/802.11be/802.11bn protocol, and certainly is also applicable to a protocol later than 802.11bn.

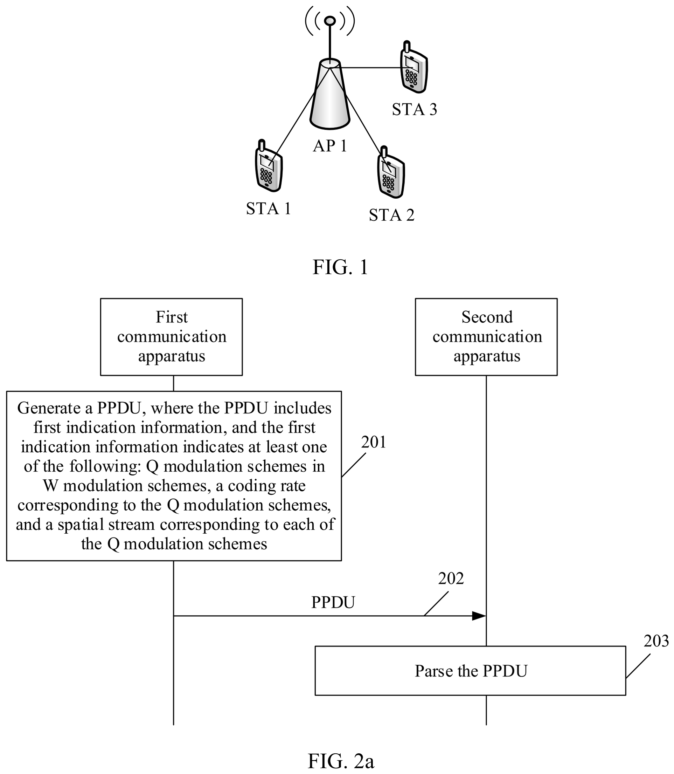

FIG. 1 is a diagram of an architecture of a communication system according to an embodiment of this application. The communication system may include one or more APs and one or more STAs. FIG. 1 shows one access point like an AP 1 and three stations such as a STA 1, a STA 2, and a STA 3. For example, the method provided in embodiments of this application is applicable to data communication between one AP and one or more STAs (for example, communication between the AP 1 and the STA 1 shown in FIG. 1, or communication between the AP 1, and the STA 1 and the STA 2), or applicable to communication between APs (for example, communication between the AP 1 and the AP 2 shown in FIG. 1), or applicable to communication between STAs (for example, communication between the STA 2 and the STA 3 shown in FIG. 1). The method provided in embodiments of this application are applicable to but are not limited to single-user uplink/downlink transmission, multi-user uplink/downlink transmission, vehicle-to-everything (vehicle-to-everything, V2X, where X may represent anything), and device-to-device (device-to-device, D2D). For example, the V2X may include vehicle to vehicle (vehicle to vehicle, V2V), vehicle to infrastructure (vehicle to infrastructure, V2I), vehicle to pedestrian (vehicle to pedestrian, V2P) communication, or vehicle to network (vehicle to network, V2N) communication.

It may be understood that, in FIG. 1, an example in which the STA is a mobile phone and the AP is a router is used. This does not mean that types of the AP and the STA in this embodiment of this application are limited. In addition, FIG. 1 illustrates only one AP and three STAs. However, there may be more or fewer APs or STAs. This is not limited in embodiments of this application.

From different perspectives of sending a PPDU and receiving the PPDU, a first communication apparatus shown below may be understood as a communication apparatus that sends the PPDU, and the second communication apparatus may be understood as a communication apparatus that receives the PPDU. In an example, the first communication apparatus and the second communication apparatus may be Wi-Fi chips, modules, or processing systems, or the like disposed in different Wi-Fi devices. In another example, the first communication apparatus may be an AP, and the second communication apparatus may be a STA. In another example, both the first communication apparatus and the second communication apparatus may be STAs (or APs). In another example, the first communication apparatus may be a STA, and the second communication apparatus may be an AP. In another example, at least one of the first communication apparatus and the second communication apparatus may be a multi-link device (multi-link device, MLD), or the like. Details are not enumerated in this embodiment of this application. For example, the multi-link device (multi-link device, MLD) means that the device has a plurality of stations (for example, APs or non-AP STAs) that respectively operate in or on different frequency bands or channels. The multi-link device includes a plurality of affiliated stations. The affiliated station may be a physical station, or may be a logical station. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in the entire device. The device in which the chip, the processing system, or the module is installed may implement the method and a function in embodiments of this application under control of the chip, the processing system, or the module. The multi-link device may implement wireless communication according to 802.11 series protocols, to communicate with another device. The another device herein may be a multi-link device, or may not be a multi-link device. An operating frequency band of the multi-link device may include but is not limited to sub 1 GHz, 2.4 GHz, 5 GHz, 6 GHz, and the like. Details are not enumerated herein.

It may be understood that, in this embodiment of this application, the method provided in embodiments of this application is described from perspectives of the first communication apparatus and the second communication apparatus. However, in a process in which the first communication apparatus and the second communication apparatus transmit the PPDU, the PPDU may be further forwarded by another apparatus. For example, the PPDU between the first communication apparatus and the second communication apparatus is forwarded by a forwarding apparatus. An apparatus other than the first communication apparatus and the second communication apparatus is not limited in embodiments of this application.

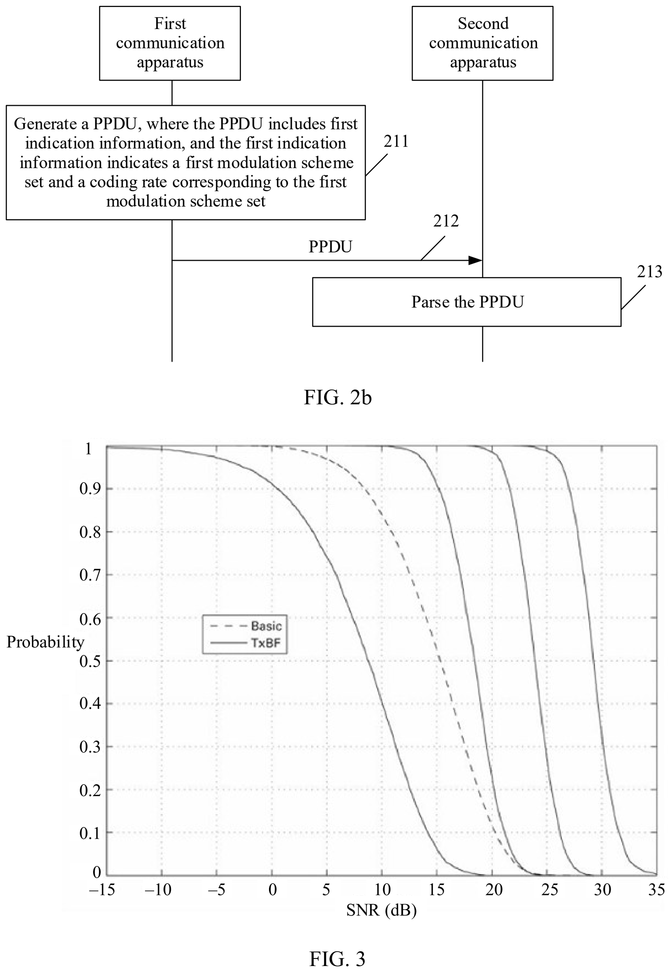

Before methods shown in FIG. 2a and FIG. 2b are described, the following first describes in detail terms in embodiments of this application.

1. W modulation schemes

For example, the W modulation schemes may include 4096QAM (which may also be referred to as 4096-QAM), 1024QAM (which may also be referred to as 1024-QAM), 256QAM (which may also be referred to as 256-QAM), 64QAM (which may also be referred to as 64-QAM), 16QAM (which may also be referred to as 16-QAM), QPSK, BPSK, and BPSK-DCM. W is a total number of modulation schemes supported by both communication parties in a non-uniform modulation scheme. In addition to including the foregoing modulation schemes, with progress of a standard, when another type of modulation scheme appears subsequently, the W modulation schemes may also be extended according to the method shown in embodiments of this application.

2. K adjacent modulation schemes

The K adjacent modulation schemes are K adjacent modulation schemes in W modulation schemes, and both W and K are positive integers. For example, K may be an integer greater than 1 and less than W. When modulation orders shown in the W modulation schemes are understood as consecutive modulation orders, the K adjacent modulation schemes may also be referred to as K consecutive modulation schemes. For example, if K=2, the K adjacent modulation schemes may be two adjacent modulation schemes in the W modulation schemes. For example, the two adjacent modulation schemes may be any one of the following: {BPSK, BPSK-DCM}; {QPSK, BPSK}; {16QAM, QPSK}; {64QAM, 16QAM}; {256QAM, 64QAM}; {1024QAM, 256QAM}; and {4096QAM, 1024QAM}. For another example, if K=3, the K adjacent modulation schemes may be three successively adjacent modulation schemes in the W modulation schemes. For example, the three adjacent modulation schemes may be any one of the following: {QPSK, BPSK, BPSK-DCM}; {16QAM, QPSK, BPSK}; {64QAM, 16QAM, QPSK}; {256QAM, 64QAM, 16QAM}; {1024QAM, 256QAM, 64QAM}; and {4096QAM, 1024QAM, 256QAM}. For another example, if K=4, the K adjacent modulation schemes may be four successively adjacent modulation schemes in the W modulation schemes. For example, the four adjacent modulation schemes may be any one of the following: {16QAM, QPSK, BPSK, BPSK-DCM}; {64QAM, 16QAM, QPSK, BPSK}; {256QAM, 64QAM, 16QAM, QPSK}, {1024QAM, 256QAM, 64QAM, 16QAM}; and {4096QAM, 1024QAM, 256QAM, 64QAM}. For another value of K and a modulation scheme corresponding to the another value, details are not enumerated herein. For ease of description, the following uses K=2, K=3, and K=4 as examples to describe the method provided in embodiments of this application.

The K adjacent modulation schemes may meet at least one of the following conditions.

Condition 1: A difference between an SNR required for demodulating a highest-order modulation scheme and an SNR required for demodulating a lowest-order modulation scheme in the K adjacent modulation schemes falls within a specific range. For example, the difference may range from 24 dB to 26 dB. For another example, the difference may fluctuate around 25 dB, and a fluctuation range may be less than or equal to 1 dB, or less than or equal to 2 dB. FIG. 3 is a diagram of distribution of output SNRs when an input SNR of a 4T4R channel is 25 dB according to an embodiment of this application. In FIG. 3, a horizontal coordinate represents the SNR, and a vertical coordinate represents a probability (probability) that the SNR is greater than or equal to a value. A dashed line represents probabilities of the SNRs when precoding is not performed, and a solid line represents probabilities of SNRs of each stream after the precoding is performed. In FIG. 3, solid lines from right to left successively correspond to a stream 0, a stream 1, a stream 2, and a stream 3. In other words, the solid lines in FIG. 3 show the probabilities of the SNRs of the four streams after precoding is performed.

For example, Table 1 shows minimum input strength of a receiver.

Table 1

| Modulation | Rate (R) | Minimum sensitivity (Minimum sensitivity) (20 MHz PPDU) (dBm) | Minimum sensitivity (40 MHz PPDU) (dBm) | Minimum sensitivity (80 MHz PPDU) (dBm) | Minimum sensitivity (160 MHz PPDU) (dBm) | Minimum sensitivity (320 MHz PPDU) (dBm) |
|---|---|---|---|---|---|---|
| BPSK | 1/2 | -82 | -79 | -76 | -73 | -70 |
| QPSK | 1/2 | -79 | -76 | -73 | -70 | -67 |
| QPSK | 3/4 | -77 | -74 | -71 | -68 | -65 |
| 16-QAM | 1/2 | -74 | -71 | -68 | -65 | -62 |
| 16-QAM | 3/4 | -70 | -67 | -64 | -61 | -58 |
| 64-QAM | 2/3 | -66 | -63 | -60 | -57 | -54 |
| 64-QAM | 3/4 | -65 | -62 | -59 | -56 | -53 |
| 64-QAM | 5/6 | -64 | -61 | -58 | -55 | -52 |
| 256-QAM | 3/4 | -59 | -56 | -53 | -50 | -47 |
| 256-QAM | 5/6 | -57 | -54 | -51 | -48 | -45 |
| 1024-QAM | 3/4 | -54 | -51 | -48 | -45 | -42 |
| 1024-QAM | 5/6 | -52 | -49 | -46 | -43 | -40 |
| 4096-QAM | 3/4 | -49 | -46 | -43 | -40 | -37 |
| 4096-QAM | 5/6 | -46 | -43 | -40 | -37 | -34 |
| BPSK-DCM (EHT-MCS 15) | 1/2 | -82 | -79 | -76 | -73 | -70 |

(continued)

| Modulation | Rate (R) | Minimum sensitivity (Minimum sensitivity) (20 MHz PPDU) (dBm) | Minimum sensitivity (40 MHz PPDU) (dBm) | Minimum sensitivity (80 MHz PPDU) (dBm) | Minimum sensitivity (160 MHz PPDU) (dBm) | Minimum sensitivity (320 MHz PPDU) (dBm) |
|---|---|---|---|---|---|---|
| BPSK-DCM-DUP (EHT-MCS 14) | 1/2 | N/A | N/A | -78 | -75 | -72 |
| NOTE-N/A=not supported by the PPDU format. | | | | | | |

At a same coding rate, a difference between SNRs corresponding to adjacent modulation schemes in the W modulation schemes may be 5 dB to 7 dB. For example, in Table 1, when a coding rate (rate, R) is 1/2, and a PPDU bandwidth is 20 MHz, a difference between an SNR required for demodulating QPSK and an SNR required for demodulating BPSK is 3 dB, and a difference between an SNR required for demodulating 16QAM and the SNR required for demodulating QPSK is 5 dB. For another example, in Table 1, when a coding rate is 3/4, and a PPDU bandwidth is 20 MHz, a difference between an SNR required for demodulating 16QAM and an SNR required for demodulating QPSK is 7 dB, a difference between an SNR required for demodulating 64QAM and the SNR required for demodulating 16QAM is 5 dB, a difference between an SNR required for demodulating 256QAM and the SNR required for demodulating 64QAM is 6 dB, and a difference between an SNR required for demodulating 1024QAM and the SNR required for demodulating 256QAM is 5 dB. Specific examples of the foregoing difference are not enumerated.

When the foregoing difference falls within the specific range, a value of K provided in this embodiment of this application can effectively adapt to SNRs of spatial streams. To be specific, when K=2, K=3, or K=4, a first communication apparatus can effectively adapt to SNRs of different spatial streams through non-uniform modulation. In other words, when a same coding rate is used for the spatial streams, different modulation schemes may be used for different spatial streams, to effectively adapt to SNRs of different spatial streams.

Condition 2: A difference between a number of modulation bits of a modulation symbol of a highest-order modulation scheme and a number of modulation bits of a modulation symbol of a lowest-order modulation scheme in the K adjacent modulation schemes is less than a first value. For example, the first value may be equal to 10, or the first value may be equal to 8.

For example, for BPSK-DCM, 0.5 bits may be mapped to one modulation symbol, that is, a number of modulation bits is 0.5 bits. For BPSK, 1 bit may be mapped to one modulation symbol, that is, a number of modulation bits is 1 bit. For QPSK, 2 bits may be mapped to one modulation symbol, that is, a number of modulation bits is 2 bits. For 16QAM, 4 bits may be mapped to one modulation symbol, that is, a number of modulation bits is 4 bits. For 64QAM, 8 bits may be mapped to one modulation symbol, that is, a number of modulation bits is 8 bits. For 1024QAM, 10 bits may be mapped to one modulation symbol, that is, a number of modulation bits is 10 bits. For 4096QAM, 12 bits may be mapped to one modulation symbol, that is, a number of modulation bits is 12 bits. When the difference between the numbers of the modulation bits is less than 10, it indicates that the K adjacent modulation schemes cannot include both 4096QAM and BPSK-DCM, or cannot include both 4096QAM and BPSK, or cannot include both 4096QAM, BPSK, and BPSK-DCM. When the difference between the numbers of the modulation bits is less than 8, it indicates that the K adjacent modulation schemes cannot include both either 4096QAM or 1024QAM and either BPSK or BPSK-DCM.

Condition 2 can effectively limit occurrence of a modulation scheme with an excessively high order and a modulation scheme with an excessively low order in the K adjacent modulation schemes. Generally, a difference between SNRs of spatial streams on a channel is limited, and adaptation to both the modulation scheme with the excessively low order and the modulation scheme with the excessively high order is not required. Therefore, limiting the occurrence of the modulation scheme with the excessively high order and the modulation scheme with the excessively low order in the K adjacent modulation schemes can reduce a number of combinations of modulation schemes in a non-uniform modulation scheme, reduce a number of indication bits without affecting a throughput, simplify a protocol, and implement implementation simplicity.

3. Modulation scheme set

K adjacent modulation schemes may also be referred to as a modulation scheme set, a modulation scheme group, or the like. For ease of description, the following uses the modulation scheme set as an example to describe the method provided in embodiments of this application.

The W modulation schemes may be classified into N modulation scheme sets, and each of the N modulation scheme sets may include the K adjacent modulation schemes. For example, N may be an integer greater than or equal to 2 and less than W. With reference to the foregoing listed values of K, for example, the N modulation scheme sets may be respectively as follows:

K=2, N=7, and the seven modulation scheme sets are {BPSK, BPSK-DCM}; {QPSK, BPSK}; {16QAM, QPSK}; {64QAM, 16QAM}; {256QAM, 64QAM}; {1024QAM, 256QAM}; and {4096QAM, 1024QAM}.

K=3, N=6, and the six modulation scheme sets are {QPSK, BPSK, BPSK-DCM}; {16QAM, QPSK, BPSK}; {64QAM, 16QAM, QPSK}; {256QAM, 64QAM, 16QAM}; {1024QAM, 256QAM, 64QAM}; and {4096QAM, 1024QAM, 256QAM}.

K=4, N=5, and the five modulation scheme sets are {16QAM, QPSK, BPSK, BPSK-DCM}; {64QAM, 16QAM, QPSK, BPSK}; {256QAM, 64QAM, 16QAM, QPSK}; {1024QAM, 256QAM, 64QAM, 16QAM}; and {4096QAM, 1024QAM, 256QAM, 64QAM}.

K=4, N=4, and the four modulation scheme sets are {16QAM, QPSK, BPSK, BPSK-DCM}; {256QAM, 64QAM, 16QAM, QPSK}; {1024QAM, 256QAM, 64QAM, 16QAM}; and {4096QAM, 1024QAM, 256QAM, 64QAM}.

Examples of another value of K and another value of N are not enumerated herein.

In this embodiment of this application, the modulation scheme sets are divided, to reserve a necessary modulation scheme combination, and reduce a number of combinations of non-uniform modulation. This not only more facilitates indication of the modulation schemes, but also can effectively reduce bit overheads.

4. Q modulation schemes

The Q modulation schemes may be Q modulation schemes in K adjacent modulation schemes, and Q is a positive integer less than or equal to K. The Q modulation schemes may be Q modulation schemes used when a first communication apparatus modulates a PPDU, or Q modulation schemes used when a second communication apparatus demodulates the PPDU. For example, Q=K. To be specific, the first communication apparatus modulates the PPDU by using the K adjacent modulation schemes (namely, one modulation scheme set in N modulation scheme sets), or the second communication apparatus demodulates the PPDU by using the K adjacent modulation schemes. For another example, Q<K. For example, the second communication apparatus demodulates the PPDU based on the Q modulation schemes (namely, a subset of one modulation scheme set in N modulation scheme sets) indicated by first indication information. For another example, the second communication apparatus may determine the Q modulation schemes based on first indication information and second indication information, and demodulate the PPDU based on the Q modulation schemes. For specific content of the first indication information and the second indication information, refer to the following descriptions. Details are not described herein.

5. Modulation scheme, coding rate, and spatial stream

For example, in a process of generating a PPDU, a first communication apparatus may perform the following steps: low-density parity-check (low-density parity-check, LDPC) encoding (only an example), constellation point mapping, and spatial and frequency mapping (spatial and frequency mapping). The steps listed herein are merely examples. When generating the PPDU, the first communication apparatus may further include another step. Details are not enumerated herein. Another step may be further included between the foregoing three steps. For example, after the LDPC encoding, the first communication apparatus may further perform spatial stream parsing. For another example, after the constellation mapping, the first communication apparatus may further perform LDPC subcarrier mapping and stream cyclic shift. Details are not enumerated herein.

When performing the LDPC encoding, the first communication apparatus may perform the LDPC encoding based on a coding rate, to obtain the coding rate. When performing the constellation mapping, the first communication apparatus maps bits to different constellation points by using a modulation scheme. When performing the spatial and frequency mapping, the first communication apparatus may map bits of different users to different spatial streams and different subcarriers.

In this embodiment of this application, the first communication apparatus may use non-uniform modulation. Therefore, the first communication apparatus may first allocate encoded bits to different spatial streams in proportion, and then separately map bits to constellation points by using different modulation schemes (for example, Q modulation schemes) for each spatial stream, to obtain modulation symbols. For example, if BPSK corresponds to spatial streams whose indexes are 4 and 5, the first communication apparatus may allocate the encoded bits to the spatial streams whose indexes are 4 and 5, then perform BPSK modulation symbol mapping, and next send BPSK-modulated modulation symbols by using the spatial streams whose indexes are 4 and 5. For example, in a process of parsing the PPDU, a second communication apparatus may perform the following steps: spatial and frequency demapping (spatial and frequency demapping), constellation point demapping, and LDPC decoding. The process in which the second communication apparatus parses the PPDU is an inverse process in which the first communication apparatus generates the PPDU. Therefore, descriptions of the foregoing steps are not described in detail herein. In this embodiment of this application, when parsing the PPDU, the second communication apparatus may demodulate the PPDU on a spatial stream by using a modulation scheme corresponding to the spatial stream, and perform decoding by using the coding rate.

Based on the foregoing relationship, when the coding rate, the modulation scheme, and the spatial stream are described in this embodiment of this application, the method provided in embodiments of this application is described by using the following manner as an example: the coding rate corresponding to the modulation scheme or a coding rate corresponding to a modulation scheme set, and the spatial stream corresponding to the modulation scheme. For example, for the Q modulation schemes, coding rates are the same. To be specific, the first communication apparatus may perform encoding by using a same coding rate, and then perform modulation by using the Q different modulation schemes. For example, for the Q modulation schemes, each of the Q modulation schemes corresponds to a different spatial stream. In other words, any two of the Q modulation schemes may not correspond to a same spatial stream.

The relationship between a modulation scheme, a coding rate, and a spatial stream in this embodiment of this application is merely an example. The process in which the first communication apparatus processes the PPDU and the process in which the second communication apparatus parses the PPDU should not be understood as a limitation on embodiments of this application.

6. Combination of a modulation scheme and a coding rate

Different modulation schemes correspond to different coding rates. Therefore, this embodiment of this application shows a combination shown in Table 2 and Table 3.

Table 2 shows an MCS indication table. An index in Table 2 may occupy 4 bits, that is, indicate an index 0 to an index 15. The index 0 to the index 15 in Table 2 may successively correspond to one modulation scheme. The index 14 and the index 15 are two special modulation schemes that are respectively UHR duplicate (UHR Duplicate, UHR DUP) and a BPSK modulation scheme using dual-carrier modulation (namely, BPSK-DCM). Each modulation scheme may correspond to one or more coding rates (referred to as a rate for short in Table 2). For example, the index 0 may indicate a BPSK modulation scheme and a coding rate being 1/2. For another example, the index 1 may indicate a QPSK modulation scheme and a coding rate being 1/2, and the index 2 may indicate a QPSK modulation scheme and a coding rate being 3/4. In other words, one index may indicate a modulation scheme and a coding rate. Examples of a relationship between an index, a modulation scheme, and a coding rate are not enumerated.

Table 2

| Index | Modulation (Modulation) | Rate (Rate) |
| --- | --- | --- |
| 0 | BPSK | 1/2 |
| 1 | QPSK | 1/2 |
| 2 | | 3/4 |
| 3 | 16-QAM | 1/2 |
| 4 | | 3/4 |
| 5 | 64-QAM | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |
| 14 | UHR DUP | 1/2 |
| 15 | BPSK-DCM | 1/2 |

Table 3 shows another MCS indication table. A difference between Table 3 and Table 2 lies in that a coding rate corresponding to a 64QAM modulation scheme in Table 3 increases by 1/2. Table 3 includes no UHR DUP modulation scheme. Therefore, an index in Table 3 may still occupy 4 bits. For other descriptions of Table 3, refer to Table 2. Details are not described herein again.

Table 3

| Index | Modulation (Modulation) | Coding rate (Rate) |
|---|---|---|
| 0 | BPSK | 1/2 |
| 1 | QPSK | 1/2 |
| 2 | | 3/4 |
| 3 | 16-QAM | 1/2 |
| 4 | | 3/4 |
| 14 | 64-QAM | 1/2 |
| 5 | | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |
| 15 | BPSK-DCM | 1/2 |

With reference to the modulation scheme set shown in this embodiment of this application, the modulation scheme set listed in the term 3 is used as an example. A combination of the modulation scheme set and a coding rate may be as follows.

K=2, N=7, and a correspondence between seven modulation scheme sets and a coding rate may be shown in Table 4. For related descriptions of an index shown in Table 4, refer to Table 10a or Table 10b below.

Table 4

| Index | Modulation scheme set | Rate |
|---|---|---|
| X1 | {BPSK, BPSK-DCM} | 1/2 |
| X2 | {QPSK, BPSK} | 1/2 |
| X3 | {16QAM, QPSK} | 1/2 |
| X4 | | 3/4 |
| X5 | {64QAM, 16QAM} | 3/4 |
| X6 | {256QAM, 64QAM} | 3/4 |
| X7 | | 5/6 |
| X8 | {1024QAM, 256QAM} | 3/4 |
| X9 | | 5/6 |
| X10 | {4096QAM, 1024QAM} | 3/4 |
| X11 | | 5/6 |

Indexes X1 to X11 shown in Table 4 represent different indexes. For a specific value, refer to the following descriptions.

K=3, N=6, and a correspondence between six modulation scheme sets and a coding rate may be shown in Table 5. For related descriptions of an index shown in Table 5, refer to the following descriptions.

Table 5

| Index | Modulation scheme set | Rate |
|---|---|---|
| Y1 | {QPSK, BPSK, BPSK-DCM} | 1/2 |
| Y2 | {16QAM, QPSK, BPSK} | 1/2 |
| Y3 | {64QAM, 16QAM, QPSK} | 3/4 |
| Y4 | {256QAM, 64QAM, 16QAM} | 3/4 |
| Y5 | {1024QAM, 256QAM, 64QAM} | 3/4 |
| Y6 | | 5/6 |
| Y7 | {4096QAM, 1024QAM, 256QAM} | 3/4 |
| Y8 | | 5/6 |

Indexes Y1 to Y8 shown in Table 5 represent different indexes. For a specific value, refer to Table 11a to Table 11c below.

K=4, N=5, and a correspondence between five modulation scheme sets and a coding rate may be shown in Table 6. For related descriptions of an index shown in Table 6, refer to the following descriptions. The 64QAM modulation scheme shown in Table 3 may correspond to a coding rate 1/2. Therefore, a coding rate corresponding to a modulation scheme set {64QAM, 16QAM, QPSK, BPSK} in Table 6 is 1/2.

Table 6

| Index | Modulation scheme set | Rate |
|---|---|---|
| Z1 | {16QAM, QPSK, BPSK, BPSK-DCM} | 1/2 |
| Z2 | {64QAM, 16QAM, QPSK, BPSK} | 1/2 |
| Z3 | {256QAM, 64QAM, 16QAM, QPSK} | 3/4 |
| Z4 | {1024QAM, 256QAM, 64QAM, 16QAM} | 3/4 |
| Z5 | {4096QAM, 1024QAM, 256QAM, 64QAM} | 3/4 |
| Z6 | | 5/6 |

Indexes Z1 to Z6 shown in Table 6 represent different indexes. For a specific value, refer to Table 12a to Table 12d below.

K=4, N=4, and a correspondence between four modulation scheme sets and a coding rate may be shown in Table 7. For related descriptions of an index shown in Table 7, refer to the following descriptions. The 64QAM modulation scheme shown in Table 2 does not correspond to the coding rate 1/2. Therefore, a modulation scheme set in Table 7 includes no {64QAM, 16QAM, QPSK, BPSK}.

Table 7

| Index | Modulation scheme set | Rate |
|---|---|---|
| O1 | {16QAM, QPSK, BPSK, BPSK-DCM} | 1/2 |
| O2 | {256QAM, 64QAM, 16QAM, QPSK} | 3/4 |
| O3 | {1024QAM, 256QAM, 64QAM, 16QAM} | 3/4 |
| O4 | {4096QAM, 1024QAM, 256QAM, 64QAM} | 3/4 |
| O5 | | 5/6 |

Indexes O1 to O5 shown in Table 7 represent different indexes. For a specific value, refer to Table 13a to Table 13d below.

FIG. 2a is a schematic flowchart of a communication method according to an embodiment of this application. For related descriptions of a first communication apparatus and a second communication apparatus in the method, refer to the foregoing descriptions. Details are not described herein again. As shown in FIG. 2a, the method includes the following steps.

201: The first communication apparatus generates a PPDU, where the PPDU includes first indication information, and the first indication information indicates at least one of the following: Q modulation schemes in W modulation schemes, a coding rate corresponding to the Q modulation schemes, and a spatial stream corresponding to each of the Q modulation schemes.

The PPDU may include the first indication information. The first indication information may be implemented in the following manners.

Implementation 1

In terms of content indicated by the first indication information, the first indication information may indicate the Q modulation schemes in the W modulation schemes.

In terms of a function of the first indication information, the first indication information may indicate the second communication apparatus to demodulate the PPDU based on modulation schemes indicated by the first indication information. The Q modulation schemes may be used by the first communication apparatus to modulate the PPDU, and may also be used by the second communication apparatus to demodulate the PPDU. Therefore, that the first indication information indicates the second communication apparatus to demodulate the PPDU based on the modulation schemes indicated by the first indication information may also be equivalent to that the modulation schemes (namely, the Q modulation schemes) indicated by the first indication information are used to modulate the PPDU, or that the modulation schemes (namely, the Q modulation schemes) indicated by the first indication information are used to demodulate the PPDU. The first indication information may be in Manner 1 or Manner 2 shown below.

Manner 1

In an example, the first indication information may include a bitmap. Each bit in the bitmap may correspond to one modulation scheme. For example, W=8. The first indication information may be 8 bits. The 8 bits may successively correspond to 4096QAM, 1024QAM, 256QAM, 64QAM, 16QAM, QPSK, BPSK, and BPSK-DCM. For example, if a value of one bit is 1, it indicates that a modulation scheme corresponding to the bit is one of the Q modulation schemes. For example, if a value of one bit is 0, it indicates that a modulation scheme corresponding to the bit is not one of the Q modulation schemes.

For example, for Manner 1, the coding rate corresponding to the Q modulation schemes may be a coding rate corresponding to a highest-order modulation scheme. For example, one coding rate may be defined for each modulation scheme in a protocol, and the coding rate corresponding to the Q modulation schemes is the coding rate corresponding to the highest-order modulation scheme in the Q modulation schemes. Alternatively, in this example, the coding rate corresponding to the Q modulation schemes may be a coding rate corresponding to a lowest-order modulation scheme in the Q modulation schemes, or the like. Details are not enumerated herein.

For example, for Manner 1, a spatial stream or a number of spatial streams corresponding to each of the Q modulation schemes may be defined in a protocol. For example, the highest-order modulation scheme in the Q modulation schemes may correspond to a spatial stream 0, or may correspond to a spatial stream 1. Details are not enumerated herein. For another example, a second-highest-order modulation scheme in the Q modulation schemes may correspond to a spatial stream 1 (relative to the highest-order modulation scheme), or may correspond to a spatial stream 2. The rest may be deduced by analogy. Details are not described herein. The related descriptions of the spatial stream herein are also applicable to Manner 2, or is also applicable to Implementation 2 below. For Implementation 1 and Implementation 2, how the second communication apparatus learns of the coding rate and a correspondence between a modulation scheme and a spatial stream is not limited in embodiments of this application.

Manner 2

In another example, the first indication information may include indication information of a modulation scheme set and a bitmap corresponding to the modulation scheme set. For example, the Q modulation schemes are Q modulation schemes in a first modulation scheme set. If N=7, 3 bits may indicate the first modulation scheme set in the seven modulation scheme sets. Because each modulation scheme set includes two modulation schemes, a 2-bit bitmap may further indicate the Q modulation schemes in the first modulation scheme set. To be specific, each bit in the bitmap may indicate whether to modulate the PPDU by using a modulation scheme corresponding to the bit in the first modulation scheme set. For example, if a value of one bit in the bitmap is 1, it indicates that a corresponding modulation scheme is one of the Q modulation schemes. To be specific, the first indication information may include an index of the first modulation scheme set and the 2-bit bitmap. For example, if the first indication information is 00110, an index of an indicated modulation scheme set is 1, the 1st modulation scheme in the modulation scheme set whose index is 1 is one of the Q modulation schemes, and the 2nd modulation scheme in the modulation scheme set whose index is 1 is not one of the Q modulation schemes. In other words, the first communication apparatus may modulate the PPDU by using the 1st modulation scheme in the modulation scheme set whose index is 1, and the second communication apparatus may demodulate the PPDU by using the 1st modulation scheme in the modulation scheme set whose index is 1. For another example, if N=6, the first indication information may include 3-bit indication information indicating the first modulation scheme set, and a 3-bit bitmap to indicate the Q modulation schemes in the first modulation scheme set. For another example, if N=5, the first indication information may include 3-bit indication information indicating the first modulation scheme set, and a 4-bit bitmap to indicate the Q modulation schemes in the first modulation scheme set. For another example, if N=4, the first indication information may include 2-bit indication information indicating the first modulation scheme set, and a 4-bit bitmap to indicate the Q modulation schemes in the first modulation scheme set.

For Manner 2, one coding rate may be defined for each modulation scheme set in a protocol. Therefore, both communication parties can learn of the coding rate based on the modulation scheme set indicated by the first indication information and a predefined relationship between a modulation scheme set and a coding rate.

Implementation 2

The first indication information may indicate the Q modulation schemes in the W modulation schemes and the coding rate corresponding to the Q modulation schemes.

To be specific, the first indication information may indicate the second communication apparatus to demodulate the PPDU based on the modulation schemes indicated by the first indication information, and decode the PPDU based on the coding rate indicated by the first indication information. The coding rate may be used by the first communication apparatus to encode the PPDU, and may also be used by the second communication apparatus to decode the PPDU. The first indication information may be in Manner 3 or Manner 4 shown below. For a method in which the first indication information indicates the Q modulation schemes, refer to Implementation 1. Details are not described herein again. In addition, as shown in Manner 3 and Manner 4 below, the first indication information may further include indication information of the coding rate.

Manner 3

A number of coding rates shown in Table 2 or Table 3 is used as an example. To be specific, the coding rate may be one of {1/2, 3/4, 2/3, 5/6}. For example, the first indication information may further include an index of the coding rate. For example, an index 0 to an index 3 may successively correspond to {1/2, 3/4, 2/3, 5/6}. In this case, the first indication information may further include 2 bits, and a value of the 2 bits may correspond to one of the index 0 to the index 3.

Manner 4

The first indication information may further include a 4-bit bitmap. Each bit in the bitmap may correspond to one coding rate. For example, a coding rate corresponding to a bit whose value is 1 in the bitmap is the coding rate corresponding to the Q modulation schemes. For descriptions of the bitmap, refer to the foregoing descriptions. Details are not described herein again.

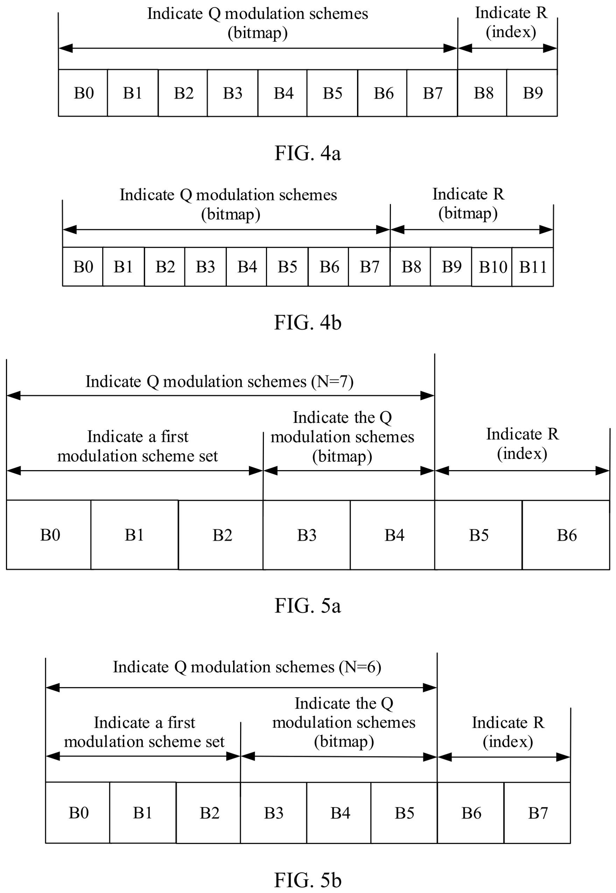

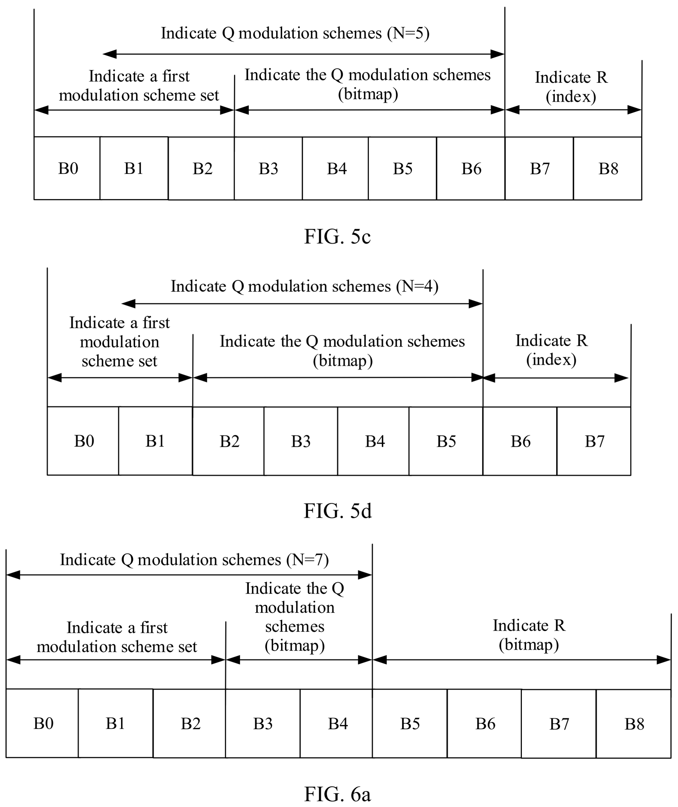

For example, Manner 1 and Manner 3 are used as examples. As shown in FIG. 4a, the first indication information may include 10 bits (B0 to B9). For example, B0 to B7 may indicate the Q modulation schemes, and B8 and B9 indicate R (namely, coding rates). For another example, Manner 1 and Manner 4 are used as examples. As shown in FIG. 4b, the first indication information may include 12 bits (B0 to B11). For example, B0 to B7 are a bitmap indicating the Q modulation schemes, and B8 to B11 are a bitmap indicating R. For another example, Manner 2 and Manner 3 are used as examples. When N=7, as shown in FIG. 5a, the first indication information may include 7 bits (B0 to B6). For example, B0 to B4 may indicate the Q modulation schemes, where B0 to B2 may indicate a modulation scheme set (for example, the first modulation scheme set), and B3 and B4 may indicate the Q modulation schemes in the first modulation scheme set. B5 and B6 indicate R. When N=6, as shown in FIG. 5b, the first indication information may include 8 bits (B0 to B7). For example, B0 to B5 may indicate the Q modulation schemes, where B0 to B2 may indicate the first modulation scheme set, and B3 to B5 may indicate the Q modulation schemes in the first modulation scheme set. B6 and B7 indicate R. When N=5, as shown in FIG. 5c, the first indication information may include 9 bits (B0 to B8). For example, B0 to B6 may indicate the Q modulation schemes, where B0 to B2 may indicate the first modulation scheme set, and B3 to B6 may indicate the Q modulation schemes in the first modulation scheme set. B7 and B8 indicate R. When N=4, as shown in FIG. 5d, the first indication information may include 8 bits (B0 to B7). For example, B0 to B5 may indicate the Q modulation schemes, where B0 and B1 may indicate the first modulation scheme set, and B2 to B5 may indicate the Q modulation schemes in the first modulation scheme set. B6 and B7 indicate R. For specific descriptions of FIG. 5a to FIG. 5d, refer to the foregoing descriptions. Details are not described again in this embodiment of this application.

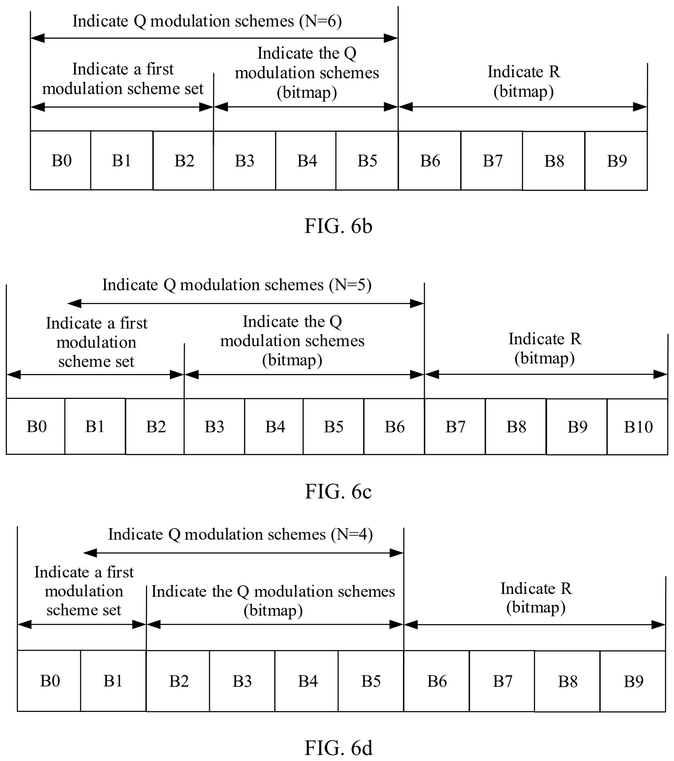

For another example, Manner 2 and Manner 4 are used as examples. When N=7, as shown in FIG. 6a, the first indication information may include 9 bits (B0 to B8). For example, B0 to B4 may indicate the Q modulation schemes, where B0 to B2 may indicate a modulation scheme set (for example, the first modulation scheme set), and B3 and B4 may indicate the Q modulation schemes in the first modulation scheme set. B5 to B8 indicate R. When N=6, as shown in FIG. 6b, the first indication information may include 10 bits (B0 to B9). For example, B0 to B5 may indicate the Q modulation schemes, where B0 to B2 may indicate the first modulation scheme set, and B3 to B5 may indicate the Q modulation schemes in the first modulation scheme set. B6 to B9 indicate R. When N=5, as shown in FIG. 6c, the first indication information may include 11 bits (B0 to B10). For example, B0 to B6 may indicate the Q modulation schemes, where B0 to B2 may indicate the first modulation scheme set, and B3 to B6 may indicate the Q modulation schemes in the first modulation scheme set. B7 to B10 indicate R. When N=4, as shown in FIG. 6d, the first indication information may include 10 bits (B0 to B9). For example, B0 to B5 may indicate the Q modulation schemes, where B0 and B1 may indicate the first modulation scheme set, and B2 to B5 may indicate the Q modulation schemes in the first modulation scheme set. B6 to B9 indicate R. For specific descriptions of FIG. 6a to FIG. 6d, refer to the foregoing descriptions. Details are not described again in this embodiment of this application.

The sequence of the content of the indication information shown in FIG. 4a and FIG. 4b, FIG. 5a to FIG. 5d, and FIG. 6a to FIG. 6d is merely an example, and should not be understood as a limitation on embodiments of this application. In Implementation 2, in this manner of indicating the Q modulation schemes and indicating the coding rate, an indication manner is more flexible.

Implementation 3

The first indication information indicates the Q modulation schemes in the W modulation schemes and the spatial stream corresponding to each of the Q modulation schemes.

The first indication information includes an MCS index (or referred to as an index for short). The MCS index may indicate the Q modulation schemes in the W modulation schemes and the spatial stream corresponding to each of the Q modulation schemes. Alternatively, the MCS index may indicate a modulation scheme corresponding to each spatial stream. For example, the modulation schemes corresponding to the spatial streams may be shown in a table, and each row in the table may correspond to one index. For example, each index may correspond to Q modulation schemes, and a difference between a number of modulation bits corresponding to a highest modulation order and a number of modulation bits corresponding to a lowest modulation order is less than 8 or 10. Each of the Q modulation schemes may correspond to at least one spatial stream. As shown in Table 8, Table 8 successively shows modulation schemes corresponding to a spatial stream 0 to a spatial stream 7. In Table 8, as stream indexes increase, modulation orders decrease.

Table 8

| Index | Modulation scheme corresponding to a spatial stream 0 | Modulation scheme corresponding to a spatial stream 1 | Modulation scheme corresponding to a spatial stream 2 | Modulation scheme corresponding to a spatial stream 3 | Modulation scheme corresponding to a spatial stream 4 | Modulation scheme corresponding to a spatial stream 5 | Modulation scheme corresponding to a spatial stream 6 | Modulation scheme corresponding to a spatial stream 7 |
|---|---|---|---|---|---|---|---|---|
| C0 | 4096QAM | 1024QAM | 1024QAM | / | / | / | / | / |
| C1 | 1024QAM | 256QAM | 16QAM | 16QAM | / | / | / | / |
| ... | ... | ... | ... | ... | ... | ... | ... | ... |

For example, if the MCS index is C0, it indicates that the modulation scheme corresponding to the spatial stream 0 is 4096QAM, the modulation schemes corresponding to the spatial stream 1 and the spatial stream 2 are 1024QAM, and the Q modulation schemes are 4096QAM and 1024QAM. Specific examples in Table 8 are not enumerated herein.

Implementation 4

The first indication information indicates the Q modulation schemes in the W modulation schemes, a coding rate corresponding to the Q modulation schemes, and the spatial stream corresponding to each of the Q modulation schemes. For example, the first indication information may include an MCS index. The MCS index may indicate the modulation scheme and a coding rate that correspond to each spatial stream. For example, Table 9 shows a relationship between a spatial stream, a modulation scheme, and a coding rate. For specific descriptions of Table 9, refer to Table 8. Details are not described herein again.

Table 9

| Index | Modulation scheme corresponding to a spatial stream 0 | Modulation scheme corresponding to a spatial stream 1 | Modulation scheme corresponding to a spatial stream 2 | Modulation scheme corresponding to a spatial stream 3 | Modulation scheme corresponding to a spatial stream 4 | Modulation scheme corresponding to a spatial stream 5 | Modulation scheme corresponding to a spatial stream 6 | Modulation scheme corresponding to a spatial stream 7 | Coding rate |
|---|---|---|---|---|---|---|---|---|---|
| C0 | 4096QAM | 1024QAM | 1024QAM | / | / | / | / | / | 1/2 |
| C1 | 1024QAM | 1024QAM | 1024QAM | 256QAM | 256QAM | 256QAM | 64QAM | 64QAM | 1/2 |
| ... | ... | ... | ... | ... | ... | ... | ... | ... | ... |

Table 8 and Table 9 are merely examples. Specific examples of the modulation scheme or the coding rate corresponding to the index and each spatial stream are not limited in embodiments of this application.

Implementation 5

The first indication information indicates a first modulation scheme set and a coding rate corresponding to the first modulation scheme set. For example, the first indication information includes T bits. A value of the T bits is an MCS index.

In an example, the MCS index may indicate (or correspond to) the first modulation scheme set and the coding rate corresponding to the first modulation scheme set. To be specific, each modulation scheme set is combined with a coding rate, and each combination may correspond to one index. For example, Table 4 is used as an example. T=4, and X1 to X11 may be respectively 0 to 10. For example, if the value of the T bits is 2, a first modulation scheme set whose index is 2 is {16QAM, QPSK}, and a coding rate is 1/2. For a relationship between a value of the T bits, and a coding rate and a first modulation scheme set, details are not enumerated herein. For another example, Table 5 is used as an example. T=3, and Y1 to Y8 may be respectively 0 to 7. For another example, Table 6 is used as an example. T=3, and Z1 to Z6 may be respectively 0 to 5. For another example, Table 7 is used as an example. T=3, and O1 to O5 may be respectively 0 to 4.

In another example, the MCS index may indicate (or correspond to) one modulation scheme in the first modulation scheme set and the coding rate corresponding to the first modulation scheme set.

For example, K=2, and the MCS index indicates a highest-order modulation scheme in the first modulation scheme set or a lowest-order modulation scheme in the first modulation scheme set. For specific descriptions of the MCS index, refer to descriptions of Table 10a and Table 10b below. Details are not described herein.

For another example, K=3, and the MCS index indicates a highest-order modulation scheme in the first modulation scheme set, or an intermediate-order modulation scheme in the first modulation scheme set, or a lowest-order modulation scheme in the first modulation scheme set. For specific descriptions of the MCS index, refer to descriptions of Table 11a to Table 11c below. Details are not described herein.

For another example, K=4, and the MCS index indicates a highest-order modulation scheme in the first modulation scheme set, or a second-highest-order modulation scheme in the first modulation scheme set, or a third-highest-order modulation scheme in the first modulation scheme set, or a lowest-order modulation scheme in the first modulation scheme set. For example, when K=4, and N=5, for specific descriptions of the MCS index, refer to descriptions of Table 12a to Table 12d below. Details are not described herein. For example, when K=4, and N=4, for specific descriptions of the MCS index, refer to descriptions of Table 13a to Table 13d below. Details are not described herein.

For specific content of the first indication information shown above in Implementation 5, refer to the descriptions of the first indication information in FIG. 2b. For specific content of the first indication information shown below in Implementation 5, refer to the descriptions of the second indication information in FIG. 2b.

In a possible implementation, for example, the first indication information may further indicate an index of a spatial stream corresponding to a modulation scheme in the first modulation scheme set. For example, the first indication information may indicate the first modulation scheme set, the coding rate corresponding to the first modulation scheme set, and an index of a spatial stream corresponding to each modulation scheme in the first modulation scheme set. In other words, in addition to the T bits shown in Implementation 5, the first indication information may include information indicating the index of the spatial stream corresponding to each modulation scheme in the first modulation scheme set.

In an example, the first indication information may include the T bits and K spatial stream indication fields. The K spatial stream indication fields include a first spatial stream indication field. The first spatial stream indication field indicates an index of a spatial stream corresponding to a first modulation scheme. The first modulation scheme is one of K adjacent modulation schemes. For example, the first modulation scheme set is represented as $\{M_0, M_1, ..., M_{K-1}\}$. K represents a number of modulation schemes with adjacent orders included in the first modulation scheme set. $M_0$ corresponds to a highest-order modulation scheme. $M_{K-1}$ corresponds to a lowest-order modulation scheme. Modulation schemes corresponding to $M_0, M_1, ...,$ and $M_{K-1}$ are successively arranged in descending order of orders. Values carried in the K spatial stream indication fields are successively $S_0, S_1, ...,$ and $S_{K-1}$. The K spatial stream indication fields may successively correspond to $M_0, M_1, ...,$ and $M_{K-1}$. A value carried in the first spatial stream indication field is $S_i$. $S_i$ represents a maximum index of the spatial stream corresponding to the first modulation scheme. $S_i$ is an integer greater than or equal to 0 and less than or equal to $N_{ss}-1$. $N_{ss}$ is a total number of spatial streams, and i is an integer greater than or equal to 0 and less than or equal to K-1.

For example, when i=0, the index of the spatial stream corresponding to the first modulation scheme is less than or equal to $S_i$. For another example, when i is greater than 0, the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$. For related descriptions of the index of the spatial stream corresponding to the first modulation scheme and the second spatial stream indication field, refer to Manner 7 in Implementation 7 below. Details are not described herein. In addition, for related descriptions of a number of bits occupied by the K spatial stream indication fields, refer to descriptions of Manner 7 in Implementation 7 below. Details are not described herein.

In another example, the first indication information may include T bits, information about Nss, and K-1 spatial stream indication fields. The K-1 spatial stream indication fields include a first spatial stream indication field. The first spatial stream indication field indicates an index of a spatial stream of a first modulation scheme. The first modulation scheme is one of K adjacent modulation schemes other than a lowest-order modulation scheme. Nss represents a total number of spatial streams.

For example, when i=0, the index of the spatial stream corresponding to the first modulation scheme is less than or equal to $S_0$. To be specific, a modulation scheme $M_0$ is applicable to a spatial stream whose index is less than or equal to $S_0$. For another example, if i is greater than 0, the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$. For example, if i=K-2, $M_{K-2}$ is applicable to a spatial stream whose index is greater than $S_{K-3}$ and less than or equal to $S_{K-2}$. For related descriptions of the index of the spatial stream corresponding to the first modulation scheme and the second spatial stream indication field, refer to Manner 8 in Implementation 7 below. Details are not described herein. In addition, for related descriptions of a number of bits occupied by the K-1 spatial stream indication fields and a number of bits occupied by the information about $N_{ss}$, refer to Manner 8 in Implementation 7 below. Details are not described herein.

In another possible implementation, for example, the first indication information may further indicate a number of spatial streams corresponding to a modulation scheme in the first modulation scheme set. For example, the first indication information may indicate the first modulation scheme set, the coding rate corresponding to the first modulation scheme set, and a number of spatial streams corresponding to each modulation scheme in the first modulation scheme set. In other words, in addition to the T bits shown in Implementation 5, the first indication information may include information indicating the number of spaces corresponding to each modulation scheme in the first modulation scheme set.

In an example, the first indication information may include the T bits and K spatial stream indication fields. The K spatial stream indication fields include a first spatial stream indication field. The first spatial stream indication field indicates a number of spatial streams corresponding to a first modulation scheme. The first modulation scheme is one of K adjacent modulation schemes.

For example, a value carried in the first spatial stream indication field is $S_i$. $S_i$ represents the number of spatial streams corresponding to the first modulation scheme. $S_i$ is an integer greater than or equal to 0 and less than or equal to $N_{ss}$-1. $N_{ss}$ is a total number of spatial streams, and i is an integer greater than or equal to 0 and less than or equal to K-1. For example, $M_0$ is applicable to $S_0$ streams. When $S_0 \neq 0$, spatial stream indexes corresponding to the modulation scheme $M_0$ are 0 to $S_0$-1. When $i \in [1, K-1]$, a modulation scheme $M_i$ is applicable to $S_i$ streams, and spatial stream indexes corresponding to the modulation scheme $M_i$ are $\sum_{m=0}^{i-1} S_m$ to $\sum_{m=0}^{i} S_m - 1$. The total number of streams Nss is equal to $\sum_{i=0}^{K-1} S_i$. For related descriptions of the number of spatial streams herein, refer to Manner 9 in Implementation 8 below. Details are not described herein.

In another example, the first indication information may include the T bits, information about Nss, and K-1 spatial stream indication fields. The K-1 spatial stream indication fields include a first spatial stream indication field. The first spatial stream indication field indicates a number of spatial streams of a first modulation scheme. The first modulation scheme is one of K adjacent modulation schemes other than a lowest-order modulation scheme. Nss represents a total number of spatial streams.

A value carried in the first spatial stream indication field is $S_i$. $S_i$ represents the number of spatial streams corresponding to the first modulation scheme. $S_i$ is an integer greater than or equal to 0 and less than or equal to $N_{ss}$-1. $N_{ss}$ is the total number of spatial streams, and i is an integer greater than or equal to 0 and less than or equal to K-2. When $i \in [1, K-2]$, a modulation scheme $M_i$ is applicable to $S_i$ streams, and spatial stream indexes corresponding to the modulation scheme $M_i$ are $\sum_{m=0}^{i-1} S_m$ to $\sum_{m=0}^{i} S_m - 1$. When i=K-1, the modulation scheme $M_i$ is applicable to $N_{ss} - (\sum_{m=0}^{i-1} S_m)$ streams, and the spatial stream indexes corresponding to the modulation scheme $M_i$ are $\sum_{m=0}^{i-1} S_m$ to Nss-1. For related descriptions of the number of spatial streams herein, refer to Manner 10 in Implementation 8 below. Details are not described herein.

In a possible implementation, Q may be greater than or equal to 1 and less than or equal to K. For example, when Q=1, it indicates the second communication apparatus to demodulate the PPDU by using a uniform modulation scheme, and when Q is greater than 1, it indicates the second communication apparatus to demodulate the PPDU by using a non-uniform modulation scheme. In other words, both the communication parties may learn of the uniform modulation scheme or the non-uniform modulation scheme based on a value of Q.

In another possible implementation, Q may be greater than or equal to 2 and less than or equal to K. For example, in addition to the first indication information, the PPDU may include third indication information. The third indication information indicates a uniform modulation scheme or a non-uniform modulation scheme. For example, the third indication information may be 1 bit. If a value of the 1 bit is 1, it indicates the second communication apparatus to use the non-uniform modulation scheme. If the value of the 1 bit is 0, it indicates the second communication apparatus to use the uniform modulation scheme.

The MCS index shown in this embodiment of this application may alternatively have another name, for example, be referred to as the index for short. A name of the MCS index is not limited in embodiments of this application.

202: The first communication apparatus sends the PPDU, and correspondingly, the second communication apparatus receives the PPDU.

203: The second communication apparatus parses the PPDU.

For example, for Implementation 1, the second communication apparatus may learn, by parsing the PPDU, that the second communication apparatus may demodulate the PPDU by using the Q modulation schemes (namely, the Q modulation schemes indicated by the first indication information) in the W modulation schemes. For example, for Implementation 2, the second communication apparatus may learn of the Q modulation schemes and the coding rate by parsing the PPDU. For example, for Implementation 3, the second communication apparatus may learn of, by parsing the PPDU, the Q modulation schemes and the spatial stream corresponding to each modulation scheme. For example, for Implementation 4, the second communication apparatus may learn of, by parsing the PPDU, the Q modulation schemes, the coding rate, and the spatial stream corresponding to each modulation scheme. For example, for Implementation 5, the second communication apparatus may learn of, by parsing the first indication information, the first modulation scheme set, the coding rate, and the spatial stream corresponding to each modulation scheme in the first modulation scheme set. For Implementation 5, the second communication apparatus may learn of, by using the K spatial stream indication fields or the K-1 spatial stream indication fields, and the information about $N_{ss}$, which modulation schemes corresponding to spatial streams, and therefore, a modulation scheme that does not correspond to a spatial stream does not belong to the Q modulation schemes.

In this embodiment of this application, a difference between numbers of modulation bits of modulation symbols of any two modulation schemes in the Q modulation schemes is less than a first value. This can effectively limit occurrence of a modulation scheme with an excessively high order and a modulation scheme with an excessively low order in the Q adjacent modulation schemes. Generally, a difference between SNRs of spatial streams on a channel is limited, and adaptation to both the modulation scheme with the excessively low order and the modulation scheme with the excessively high order is not required. Therefore, a difference between numbers of modulation bits of modulation symbols of any two modulation schemes in the Q modulation schemes is less than the first value. This can implement modulation of the PPDU by the first communication apparatus by using the non-uniform modulation scheme, ensure a throughput, further reduce a number of combinations of modulation schemes in non-uniform modulation, simplify a protocol, and implement implementation simplicity.

FIG. 2b is a schematic flowchart of a communication method according to an embodiment of this application. For related descriptions of a first communication apparatus and a second communication apparatus in the method, refer to the foregoing descriptions. Details are not described herein again. As shown in FIG. 2b, the method includes the following steps.

211: The first communication apparatus generates a PPDU, where the PPDU includes first indication information, and the first indication information indicates a first modulation scheme set and a coding rate corresponding to the first modulation scheme set.

For descriptions of the first indication information, refer to Implementation 6 below. For example, the PPDU may further include second indication information. The second indication information may indicate an index of a spatial stream corresponding to a modulation scheme in the first modulation scheme set. For related descriptions of the second indication information, refer to Implementation 7 and Implementation 8 below. The following describes the first indication information and the second indication information in detail.

Implementation 6

In terms of content indicated by the first indication information, the first indication information indicates the first modulation scheme set and the coding rate corresponding to the first modulation scheme set.

In terms of a function of the first indication information, the first indication information indicates the second communication apparatus to demodulate the PPDU based on a modulation scheme indicated by the first indication information, and decode the PPDU based on the coding rate indicated by the first indication information. Alternatively, Q modulation schemes in K adjacent modulation schemes in the first modulation scheme set are used to modulate the PPDU, and the coding rate is used to decode the PPDU. Alternatively, the foregoing descriptions may be equivalent to that the PPDU is modulated based on the Q modulation schemes, and is encoded based on the coding rate.

For example, the first indication information includes T bits. A value of the T bits is an MCS index.

Manner 5

In an example, the MCS index indicates the first modulation scheme set and the coding rate corresponding to the first modulation scheme set. In other words, after a modulation scheme set is combined with a coding rate, each combination may correspond to one index. For example, Table 4 is used as an example. T=4, and X1 to X11 may be respectively 0 to 10. For example, if the value of the T bits is 2, a first modulation scheme set whose index is 2 is {16QAM, QPSK}, and a coding rate is 1/2. For a relationship between a value of the T bits, and a coding rate and a first modulation scheme set, details are not enumerated herein. For another example, Table 5 is used as an example. T=3, and Y1 to Y8 may be respectively 0 to 7. For another example, Table 6 is used as an example. T=3, and Z1 to Z6 may be respectively 0 to 5. For another example, Table 7 is used as an example. T=3, and O1 to O5 may be respectively 0 to 4.

Manner 6

In another example, the MCS index indicates one of the K adjacent modulation schemes included in the first modulation scheme set, and the coding rate corresponding to the first modulation scheme set. In this manner, Table 2 or Table 3 may be reused, thereby reducing bit overheads.
In an example, K=2, and the MCS index indicates a highest-order modulation scheme in the K adjacent modulation schemes or a lowest-order modulation scheme in the K adjacent modulation schemes.
For example, the MCS index indicates the highest-order modulation scheme in the K adjacent modulation schemes. The MCS index may be shown in Table 10a. Indexes reused in Table 10a and Table 10b may be shown in Table 2. For example, when the first modulation scheme set is {BPSK, BPSK-DCM}, and R=1/2, the highest-order modulation scheme in the first modulation scheme set is BPSK. It can be learned from Table 2 that an index corresponding to BPSK is 0. Therefore, an index of {BPSK, BPSK-DCM} and R=1/2 is 0. For another example, when the first modulation scheme set is {QPSK, BPSK}, and R=1/2, the highest-order modulation scheme in the first modulation scheme set is QPSK. It can be learned from Table 2 that an index of QPSK corresponding to a coding rate 1/2 is 1. Therefore, an index of {QPSK, BPSK} and R=1/2 is 1. For another example, when the first modulation scheme set is {16QAM, QPSK}, and R=1/2, an index of 16QAM corresponding to a coding rate 1/2 is 3. Therefore, an index of {16QAM, QPSK} and R=1/2 is 3. Other descriptions of Table 10a are not enumerated.

Table 10a

| Index | Modulation scheme set | Rate |
|---|---|---|
| 0 | {BPSK, BPSK-DCM} | 1/2 |
| 1 | {QPSK, BPSK} | 1/2 |
| 3 | {16QAM, QPSK} | 1/2 |
| 4 | | 3/4 |
| 6 | {64QAM, 16QAM} | 3/4 |
| 8 | {256QAM, 64QAM} | 3/4 |
| 9 | | 5/6 |
| 10 | {1024QAM, 256QAM} | 3/4 |
| 11 | | 5/6 |
| 12 | {4096QAM, 1024QAM} | 3/4 |
| 13 | | 5/6 |

For Table 10a, T=4. For example, if the value of the T bits is 12, the value 12 indicates that the first modulation scheme set is {4096QAM, 1024QAM}, and R=3/4.
For example, the MCS index indicates the lowest-order modulation scheme in the K adjacent modulation schemes. The MCS index may be shown in Table 10b. For specific descriptions of Table 10b, refer to Table 10a. Details are not described herein again.

Table 10b

| Index | Modulation scheme set | Rate |
|---|---|---|
| 15 | {BPSK, BPSK-DCM} | 1/2 |
| 0 | {QPSK, BPSK} | 1/2 |
| 1 | {16QAM, QPSK} | 1/2 |
| 2 | | 3/4 |
| 4 | {64QAM, 16QAM} | 3/4 |
| 6 | {256QAM, 64QAM} | 3/4 |
| 7 | | 5/6 |
| 8 | {1024QAM, 256QAM} | 3/4 |
| 9 | | 5/6 |
| 10 | {4096QAM, 1024QAM} | 3/4 |
| 11 | | 5/6 |

For Table 10b, T=4. For example, if the value of the T bits is 10, the value 10 indicates that the first modulation scheme set is {4096QAM, 1024QAM}, and R=3/4.

In another example, K=3, and the MCS index indicates a highest-order modulation scheme in the K adjacent modulation schemes, or an intermediate-order modulation scheme in the K adjacent modulation schemes, or a lowest-order modulation scheme in the K adjacent modulation schemes.

For example, the MCS index indicates the highest-order modulation scheme in the K adjacent modulation schemes. The MCS index may be shown in Table 11a. Indexes reused in Table 11a to Table 11c may be shown in Table 2.

Table 11a

| Index | Modulation scheme set | Rate |
|---|---|---|
| 1 | {QPSK, BPSK, BPSK-DCM} | 1/2 |
| 3 | {16QAM, QPSK, BPSK} | 1/2 |
| 6 | {64QAM, 16QAM, QPSK} | 3/4 |
| 8 | {256QAM, 64QAM, 16QAM} | 3/4 |
| 10 | {1024QAM, 256QAM, 64QAM} | 3/4 |
| 11 | | 5/6 |
| 12 | {4096QAM, 1024QAM, 256QAM} | 3/4 |
| 13 | | 5/6 |

For Table 11a, T=4. For example, if the value of the T bits is 12, the value 12 indicates that the first modulation scheme set is {4096QAM, 1024QAM, 256QAM}, and R=3/4.

For example, the MCS index indicates the intermediate-order modulation scheme in the K adjacent modulation schemes. The MCS index may be shown in Table 11b.

Table 11b

| Index | Modulation scheme set | Rate |
|---|---|---|
| 0 | {QPSK, BPSK, BPSK-DCM} | 1/2 |
| 1 | {16QAM, QPSK, BPSK} | 1/2 |
| 4 | {64QAM, 16QAM, QPSK} | 3/4 |
| 6 | {256QAM, 64QAM, 16QAM} | 3/4 |

(continued)

| Index | Modulation scheme set | Rate |
|---|---|---|
| 8 | {1024QAM, 256QAM, 64QAM} | 3/4 |
| 9 | | 5/6 |
| 10 | {4096QAM, 1024QAM, 256QAM} | 3/4 |
| 11 | | 5/6 |

For Table 11b, T=4. For example, if the value of the T bits is 10, the value 10 indicates that the first modulation scheme set is {4096QAM, 1024QAM, 256QAM}, and R=3/4.

For example, the MCS index indicates the lowest-order modulation scheme in the K adjacent modulation schemes. The MCS index may be shown in Table 11c.

Table 11c

| Index | Modulation scheme set | Rate |
|---|---|---|
| 15 | {QPSK, BPSK, BPSK-DCM} | 1/2 |
| 0 | {16QAM, QPSK, BPSK} | 1/2 |
| 2 | {64QAM, 16QAM, QPSK} | 3/4 |
| 4 | {256QAM, 64QAM, 16QAM} | 3/4 |
| 6 | {1024QAM, 256QAM, 64QAM} | 3/4 |
| 7 | | 5/6 |
| 8 | {4096QAM, 1024QAM, 256QAM} | 3/4 |
| 9 | | 5/6 |

For Table 11c, T=4. For example, if the value of the T bits is 8, the value 8 indicates that the first modulation scheme set is {4096QAM, 1024QAM, 256QAM}, and R=3/4.

For specific descriptions of Table 11a to Table 11c, adaptively refer to Table 10a or Table 10b. Details are not described again in this embodiment of this application.

In another example, K=4, and the MCS index may indicate a highest-order modulation scheme in the K adjacent modulation schemes, or a second-highest-order modulation scheme in the K adjacent modulation schemes, or a third-highest-order modulation scheme in the K adjacent modulation schemes, or a lowest-order modulation scheme in the K adjacent modulation schemes.

When K=4, and N=5, for example, the MCS index indicates the highest-order modulation scheme in the K adjacent modulation schemes, as shown in Table 12a. Because a coding rate corresponding to 64QAM is 1/2, Table 3 may be reused. Each index shown in Table 3 is used as an example. The descriptions are also applicable to Table 12b to Table 12d below.

Table 12a

| Index | Modulation scheme set | Rate |
|---|---|---|
| 3 | {16QAM, QPSK, BPSK, BPSK-DCM} | 1/2 |
| 14 | {64QAM, 16QAM, QPSK, BPSK} | 1/2 |
| 8 | {256QAM, 64QAM, 16QAM, QPSK} | 3/4 |
| 10 | {1024QAM, 256QAM, 64QAM, 16QAM} | 3/4 |
| 12 | {4096QAM, 1024QAM, 256QAM, 64QAM} | 3/4 |
| 13 | | 5/6 |

For Table 12a, T=4. For example, if the value of the T bits is 12, the value 12 indicates that the first modulation scheme set is {4096QAM, 1024QAM, 256QAM, 64QAM}, and R=3/4.

When K=4, and N=5, for example, the MCS index indicates the second-highest-order modulation scheme in the K adjacent modulation schemes, as shown in Table 12b.

Table 12b

| Index | Modulation scheme set | Rate |
|---|---|---|
| 1 | {16QAM, QPSK, BPSK, BPSK-DCM} | 1/2 |
| 3 | {64QAM, 16QAM, QPSK, BPSK} | 1/2 |
| 6 | {256QAM, 64QAM, 16QAM, QPSK} | 3/4 |
| 8 | {1024QAM, 256QAM, 64QAM, 16QAM} | 3/4 |
| 10 | {4096QAM, 1024QAM, 256QAM, 64QAM} | 3/4 |
| 11 | | 5/6 |

For Table 12b, T=4. For example, if the value of the T bits is 10, the value 10 indicates that the first modulation scheme set is {4096QAM, 1024QAM, 256QAM, 64QAM}, and R=3/4.

When K=4, and N=5, for example, the MCS index indicates the third-highest-order modulation scheme in the K adjacent modulation schemes, as shown in Table 12c.

Table 12c

| Index | Modulation scheme set | Rate |
|---|---|---|
| 0 | {16QAM, QPSK, BPSK, BPSK-DCM} | 1/2 |
| 1 | {64QAM, 16QAM, QPSK, BPSK} | 1/2 |
| 4 | {256QAM, 64QAM, 16QAM, QPSK} | 3/4 |
| 6 | {1024QAM, 256QAM, 64QAM, 16QAM} | 3/4 |
| 8 | {4096QAM, 1024QAM, 256QAM, 64QAM} | 3/4 |
| 9 | | 5/6 |

For Table 12c, T=4. For example, if the value of the T bits is 8, the value 8 indicates that the first modulation scheme set is {4096QAM, 1024QAM, 256QAM, 64QAM}, and R=3/4.

When K=4, and N=5, for example, the MCS index indicates the lowest-order modulation scheme in the K adjacent modulation schemes, as shown in Table 12d.

Table 12d

| Index | Modulation scheme set | Rate |
|---|---|---|
| 15 | {16QAM, QPSK, BPSK, BPSK-DCM} | 1/2 |
| 0 | {64QAM, 16QAM, QPSK, BPSK} | 1/2 |
| 2 | {256QAM, 64QAM, 16QAM, QPSK} | 3/4 |
| 4 | {1024QAM, 256QAM, 64QAM, 16QAM} | 3/4 |
| 6 | {4096QAM, 1024QAM, 256QAM, 64QAM} | 3/4 |
| 7 | | 5/6 |

For Table 12d, T=4. For example, if the value of the T bits is 6, the value 6 indicates that the first modulation scheme set is {4096QAM, 1024QAM, 256QAM, 64QAM}, and R=3/4.

When K=4, and N=4, for example, the MCS index indicates the highest-order modulation scheme in the K adjacent modulation schemes, as shown in Table 13a. Indexes reused in Table 13a to Table 13d may be shown in Table 2.

Table 13a

| Index | Modulation scheme set | Rate |
|---|---|---|
| 3 | {16QAM, QPSK, BPSK, BPSK-DCM} | 1/2 |
| 8 | {256QAM, 64QAM, 16QAM, QPSK} | 3/4 |
| 10 | {1024QAM, 256QAM, 64QAM, 16QAM} | 3/4 |
| 12 | {4096QAM, 1024QAM, 256QAM, 64QAM} | 3/4 |
| 13 | | 5/6 |

For Table 13a, T=4. For example, if the value of the T bits is 12, the value 12 indicates that the first modulation scheme set is {4096QAM, 1024QAM, 256QAM, 64QAM}, and R=3/4.

When K=4, and N=4, for example, the MCS index indicates the second-highest-order modulation scheme in the K adjacent modulation schemes, as shown in Table 13b.

Table 13b

| Index | Modulation scheme set | Rate |
|---|---|---|
| 1 | {16QAM, QPSK, BPSK, BPSK-DCM} | 1/2 |
| 6 | {256QAM, 64QAM, 16QAM, QPSK} | 3/4 |
| 8 | {1024QAM, 256QAM, 64QAM, 16QAM} | 3/4 |
| 10 | {4096QAM, 1024QAM, 256QAM, 64QAM} | 3/4 |
| 11 | | 5/6 |

For Table 13b, T=4. For example, if the value of the T bits is 10, the value 10 indicates that the first modulation scheme set is {4096QAM, 1024QAM, 256QAM, 64QAM}, and R=3/4.

When K=4, and N=4, for example, the MCS index indicates the third-highest-order modulation scheme in the K adjacent modulation schemes, as shown in Table 13c.

Table 13c

| Index | Modulation scheme set | Rate |
|---|---|---|
| 0 | {16QAM, QPSK, BPSK, BPSK-DCM} | 1/2 |
| 4 | {256QAM, 64QAM, 16QAM, QPSK} | 3/4 |
| 6 | {1024QAM, 256QAM, 64QAM, 16QAM} | 3/4 |
| 8 | {4096QAM, 1024QAM, 256QAM, 64QAM} | 3/4 |
| 9 | | 5/6 |

For Table 13c, T=4. For example, if the value of the T bits is 8, the value 8 indicates that the first modulation scheme set is {4096QAM, 1024QAM, 256QAM, 64QAM}, and R=3/4.

When K=4, and N=4, for example, the MCS index indicates the lowest-order modulation scheme in the K adjacent modulation schemes, as shown in Table 13d.

Table 13d

| Index | Modulation scheme set | Rate |
|---|---|---|
| 15 | {16QAM, QPSK, BPSK, BPSK-DCM} | 1/2 |
| 2 | {256QAM, 64QAM, 16QAM, QPSK} | 3/4 |
| 4 | {1024QAM, 256QAM, 64QAM, 16QAM} | 3/4 |
| 6 | {4096QAM, 1024QAM, 256QAM, 64QAM} | 3/4 |
| 7 | | 5/6 |

For Table 13d, T=4. For example, if the value of the T bits is 6, the value 6 indicates that the first modulation scheme set is {4096QAM, 1024QAM, 256QAM, 64QAM}, and R=3/4.

In a specific implementation, both communication parties may indicate the first modulation scheme set and the coding rate based on an index indicated in any one of Table 10a and Table 10b, Table 11a to Table 11c, Table 12a to Table 12d, and Table 13a to Table 13d.

In Implementation 6, the first modulation scheme set and the coding rate can be indicated by using fewer bits, thereby effectively reducing bit overheads and reducing signaling overheads. Compared with an enumerative listing method, Implementation 6 can avoid a processing burden caused by storage, reading, and searching a large table, and can further reduce bit overheads, and balance the processing burden and indication overheads.

For ease of reference, implementations or manners are numbered in this embodiment of this application, for example, Implementation 1 to Implementation 8, or for another example, Manner 1 to Manner 10. However, these numbers should not be understood as a limitation on embodiments of this application.

The PPDU includes the second indication information. The second indication information may be implemented in the following manners.

Implementation 7

The second indication information indicates the index of the spatial stream corresponding to the modulation scheme in the first modulation scheme set.

The first indication information indicates the index of the first modulation scheme set. Therefore, the second indication information may indicate an index of a spatial stream corresponding to each modulation scheme in the first modulation scheme set. In this case, one or some modulation schemes may correspond to no spatial stream, and the modulation scheme that corresponds to no spatial stream does not belong to the Q modulation schemes.

In this case, in Manner 7 shown below, the second indication information may include K spatial stream indication fields. A sequence of modulation schemes corresponding to the K spatial stream indication fields is the same as a sequence of the modulation schemes in the first modulation scheme set. Alternatively, in Manner 8 shown below, the second indication information includes K-1 spatial stream indication fields and information about $N_{55}$. A sequence of modulation schemes corresponding to the K-1 spatial stream indication fields is the same as a sequence of first K-1 high modulation schemes in the first modulation scheme set. To be specific, rankings of the modulation schemes corresponding to the K-1 spatial stream indication fields successively correspond to rankings of modulation schemes other than a lowest-order modulation scheme in the first modulation scheme set.

For ease of description, in Manner 7 to Manner 10 shown below, an example in which a first spatial stream indication field corresponds to a first modulation scheme is used for description. To be specific, the first spatial stream indication field may indicate an index of a spatial stream of the first modulation scheme. A ranking of the first spatial stream indication field in the K spatial stream indication fields is the same as a ranking of the first modulation scheme in the K adjacent modulation schemes. For example, the first modulation scheme set is represented as {$M_0$, Mi, ..., $M_r$i}. K represents a number of modulation schemes with adjacent orders included in the first modulation scheme set. $M_0$ corresponds to a highest-order modulation scheme. $M_{K-1}$ corresponds to a lowest-order modulation scheme. Modulation schemes corresponding to $M_0$, $M_1$, ..., and $M_{K-1}$ are successively arranged in descending order of orders. Values carried in the K spatial stream indication fields are successively $S_0$, $S_1$, ..., and $S_{K-1}$. The K spatial stream indication fields may successively correspond to $M_0$, $M_1$, ..., and $M_{K-1}$. For example, if the first spatial stream indication field is the 1st spatial stream indication field in the K spatial stream indication fields, the first modulation scheme is the 1st modulation scheme in the first modulation scheme set, namely, the highest-order modulation scheme in the first modulation scheme set. Alternatively, a ranking of the first spatial stream indication field in the K-1 spatial stream indication fields is the same as a ranking of the first modulation scheme in K-1 adjacent modulation schemes other than the lowest-order modulation scheme in the first modulation scheme set.

It may be understood that the sequence of the modulation schemes in the modulation scheme set and the sequence of the modulation schemes corresponding to the spatial stream indication fields are merely examples. For example, the modulation schemes in the first modulation scheme set may alternatively be arranged in ascending order of orders. Correspondingly, the modulation schemes corresponding to the K-1 spatial stream indication fields or the K spatial stream indication fields are also arranged in ascending order of orders. For a related embodiment of the ascending order of the orders, refer to Manner 7 to Manner 10 shown in this embodiment of this application. Details are not described in this embodiment of this application again.

Manner 7

A value carried in the first spatial stream indication field is $S_i$. $S_i$ may represent a maximum index (or referred to as an index boundary) of the spatial stream corresponding to the first modulation scheme. $S_i$ is an integer greater than or equal to 0 and less than or equal to $N_{ss}$-1, that is, $S_i \in [0, N_{ss}$-1]. $S_{K-1}$+1 indicates a total number of streams. $N_{ss}$ is a total number of spatial streams, and i is an integer greater than or equal to 0 and less than or equal to K-1, that is, $i \in [O, K 1]$. In this embodiment of this application, an example in which a start index is 0 is used for description. In a specific implementation, an example in which the start index is 1 may alternatively be used. This is not limited in embodiments of this application.

In an example, if i=0, the index of the spatial stream corresponding to the first modulation scheme is less than or equal to $S_0$. To be specific, a modulation scheme $M_0$ is applicable to a spatial stream whose index is less than or equal to $S_0$.

In another example, if i is greater than 0, the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$. To be specific, a modulation scheme $M_i$ is applicable to a spatial stream whose index is greater than $S_{i-1}$ and not greater than $S_i$. The second spatial stream indication field is located before the first spatial stream indication field in the K spatial stream indication fields. To be specific, a modulation scheme corresponding to the second spatial stream indication field is $M_{i-1}$, and the modulation scheme corresponding to the first spatial stream indication field is $M_i$.

For example, the total number of streams Nss=8, $\{M_0, M_1, M_2, M_3\}$={4096QAM, 1024QAM, 256QAM, 64QAM}, and values carried in four spatial stream indication fields are S0=3, S1=3, S2=5, and S3=7. When i=0, 4096QAM is applicable to a spatial stream whose index is less than or equal to 3, to be specific, 4096QAM may be used for four streams whose indexes are 0 to 3. When i=1, 1024QAM is applicable to a spatial stream whose index is greater than $S_0$ and less than or equal to $S_1$, to be specific, 1024QAM is not used for any stream. When i=2, 256QAM is applicable to a spatial stream whose index is greater than $S_i$ and less than or equal to $S_2$, to be specific, 256QAM is used for two streams whose indexes are 4 and 5. When i=3, 64QAM is applicable to a spatial stream whose index is greater than $S_2$ and less than or equal to $S_3$, to be specific, 64QAM is used for two streams whose indexes are 6 and 7.

For another example, the total number of streams Nss=8, $\{M_0, M_1, M_2, M_3\}$={4096QAM, 1024QAM, 256QAM, 64QAM}, and values carried in four spatial stream indication fields are S0=3, S1=4, S2=5, and S3=7. When i=0, 4096QAM is applicable to a spatial stream whose index is less than or equal to 3, to be specific, 4096QAM may be used for four streams whose indexes are 0 to 3. When i=1, 1024QAM is applicable to a spatial stream whose index is greater than $S_0$ and less than or equal to $S_1$, to be specific, 1024QAM may be used for a stream whose index is 4. When i=2, 256QAM is applicable to a spatial stream whose index is greater than $S_1$ and less than or equal to $S_2$, to be specific, 256QAM is used for a stream whose index is 5. When i=3, 64QAM is applicable to a spatial stream whose index is greater than $S_2$ and less than or equal to $S_3$, to be specific, 64QAM is used for two streams whose indexes are 6 and 7.

For Manner 7, a number of bits occupied by each spatial stream indication field may be determined by $N_{ss}$. For example, if Nss is greater than 2 and less than or equal to 4, each spatial stream indication field may occupy 2 bits, and the K spatial stream indication fields need to occupy 2*K bits, that is, the second indication information occupies the 2*K bits. For example, if $N_{ss}$ is greater than 4 and less than or equal to 8, each spatial stream indication field may occupy 3 bits, and the K spatial stream indication fields need to occupy 3*K bits, that is, the second indication information occupies the 3*K bits. For example, if $N_{ss}$ is greater than 8 and less than or equal to 16, each spatial stream indication field may occupy 4 bits, and the K spatial stream indication fields need to occupy 4*K bits, that is, the second indication information occupies the 4*K bits. The rest may be deduced by analogy. Details are not enumerated herein.

Manner 8

A value carried in the first spatial stream indication field is $S_i$. $S_i$ represents a maximum index of the spatial stream corresponding to the first modulation scheme. $S_i$ is an integer greater than or equal to 0 and less than or equal to $N_{ss}$-1, that is, $S_i \in [0, N_{ss}$-1]. $N_{ss}$ is a total number of spatial streams, and i is an integer greater than or equal to 0 and less than or equal to K-2, that is, $i \in [0, K$-2].

In an example, if i=0, the index of the spatial stream corresponding to the first modulation scheme is less than or equal to $S_0$. To be specific, a modulation scheme $M_0$ is applicable to a spatial stream whose index is less than or equal to $S_0$.

In another example, if i is greater than 0, the index of the spatial stream corresponding to the first modulation scheme is greater than $S_{i-1}$ and less than or equal to $S_i$. $S_{i-1}$ is a value carried in a second spatial stream indication field, and $S_{i-1}$ is less than or equal to $S_i$. For example, if i=K-2, $M_{K-2}$ is applicable to a spatial stream whose index is greater than $S_{K-3}$ and less than or equal to $S_{K-2}$.

For example, the total number of streams Nss=8, $\{M_0, M_1, M_2, M_3\}$={4096QAM, 1024QAM, 256QAM, 64QAM}, and values carried in three spatial stream indication fields are S0=3, S1=3, and S2=5. When i=0, 4096QAM is applicable to a spatial stream whose index is less than or equal to 3, to be specific, 4096QAM may be used for four streams whose indexes are 0 to 3. When i=1, 1024QAM is applicable to a spatial stream whose index is greater than $S_0$ and less than or equal to $S_1$, to be specific, 1024QAM is not used for any stream. When i=2, 256QAM is applicable to a spatial stream whose index is greater than $S_1$ and less than or equal to $S_2$, to be specific, 256QAM is used for two streams whose indexes are 4 and 5. When i=3, 64QAM is applicable to a spatial stream whose index is greater than $S_2$ and less than or equal to 7, to be specific, 64QAM is used for two streams whose indexes are 6 and 7. For other descriptions of Manner 8, refer to Manner 7.

Details are not described herein again.

For Manner 8, a number of bits occupied by each spatial stream indication field may be determined by $N_{ss}$. For example, if Nss is greater than 2 and less than or equal to 4, each spatial stream indication field may occupy 2 bits, and the K-1 spatial stream indication fields need to occupy 2*(K-1) bits. In addition, the second indication information further includes the information about Nss, and a field indicating Nss also needs to occupy 2 bits. Therefore, the second indication information occupies 2*K bits. For example, if $N_{ss}$ is greater than 4 and less than or equal to 8, each spatial stream indication field may occupy 3 bits, and the K-1 spatial stream indication fields need to occupy 3*(K-1) bits. In addition, the information about $N_{ss}$ is included. Therefore, the second indication information occupies 3*K bits. For example, if $N_{ss}$ is greater than 8 and less than or equal to 16, each spatial stream indication field occupies 4 bits, and the K-1 spatial stream indication fields need to occupy 4*(K-1) bits. In addition, the information about Nss is included. Therefore, the second indication information occupies 4*K bits. The rest may be deduced by analogy. Details are not enumerated herein.

Implementation 8

The second indication information indicates a number of spatial streams corresponding to the modulation scheme in the first modulation scheme set.

Manner 9

A value carried in the first spatial stream indication field is $S_i$. $S_i$ represents the number of spatial streams corresponding to the first modulation scheme. $S_i$ is an integer greater than or equal to 0 and less than or equal to $N_{ss}$-1. $N_{ss}$ is a total number of spatial streams, and i is an integer greater than or equal to 0 and less than or equal to K-1. For example, $M_0$ is applicable to $S_0$ streams. When $S_0 \neq 0$, spatial stream indexes corresponding to the modulation scheme $M_0$ are 0 to $S_0$-1. When $i \in [1, K-1]$, a modulation scheme $M_i$ is applicable to $S_i$ streams, and spatial stream indexes corresponding to the modulation scheme $M_i$ are $\sum_{m=0}^{i-1} S_m$ to $\sum_{m=0}^{i} S_m - 1$. The total number of streams Nss is equal to $\sum_{i=0}^{K-1} S_i$.

For example, if Nss=8, {M0, $M_1$, ..., M3}={4096QAM, 1024QAM, 256QAM, 64QAM}, and values carried in four spatial stream indication fields are $S_0$=2, $S_1$=0, $S_2$=3, and $S_3$=3, it indicates that 4096QAM is used for two streams whose indexes are 0 and 1, 1024QAM is not used for any stream, 256QAM is used for three streams whose indexes are 2 to 4, and 64QAM is used for three streams whose indexes are 5 to 7.

For other descriptions of Manner 9, refer to Manner 7. For example, for Manner 9, when $N_{ss}$=8, the second indication information may occupy 3*K bits.

Manner 10

A value carried in the first spatial stream indication field is $S_i$. $S_i$ represents the number of spatial streams corresponding to the first modulation scheme. $S_i$ is an integer greater than or equal to 0 and less than or equal to $N_{ss}$-1. $N_{ss}$ is a total number of spatial streams, and i is an integer greater than or equal to 0 and less than or equal to K-2. When $i \in [1, K-2]$, a modulation scheme $M_i$ is applicable to $S_i$ streams, and spatial stream indexes corresponding to the modulation scheme $M_i$ are $\sum_{m=0}^{i-1} S_m$ to $\sum_{m=0}^{i} S_m - 1$. When i=K-1, the modulation scheme $M_i$ is applicable to $\text{Nss} - (\sum_{m=0}^{i-1} S_m)$ streams, and the spatial stream indexes corresponding to the modulation scheme $M_i$ are $\sum_{m=0}^{i-1} S_m$ to Nss-1. For related descriptions of $M_0$, refer to Manner 9. Details are not described herein again.

For example, if Nss=8, {M0, M1, ..., M3}={4096QAM, 1024QAM, 256QAM, 64QAM}, and values carried in three spatial stream indication fields are S0=2, S1=0, and S2=3, it indicates that 4096QAM is used for two streams whose indexes are 0 and 1, 1024QAM is not used for any stream, 256QAM is used for three streams whose indexes are 2, 3, and 4, and 64QAM is used for three streams whose indexes are 5, 6, and 7.

For other descriptions of Manner 10, refer to Manner 8. Details are not described herein again. For example, for descriptions of a number of bits occupied by the second indication information, refer to Manner 8.

For a manner that is not described in detail in any one of Manner 7 to Manner 10, refer to another manner. Details are not described herein again.

The second indication information shown in Implementation 7 and Implementation 8 is merely an example. For example, in a specific implementation, all possibilities of $S_0$, $S_1$, ..., and $S_{K-1}$ or $S_0$, $S_1$, ..., and $S_{K-2}$ may alternatively be enumerated in a table. An enumeration manner may be shown in Table 8 and Table 9. The enumeration manner is not described in detail herein again. For example, a modulation scheme and a coding rate that correspond to each spatial stream may be enabled to correspond to each other based on Table 8 or Table 9, and one index may indicate the modulation schemes and the coding rate that correspond to the spatial streams. Specific content of the table is not enumerated in this embodiment of this application.

In a possible implementation, Q may be greater than or equal to 1 and less than or equal to K. For example, when Q=1, it indicates the second communication apparatus to demodulate the PPDU by using a uniform modulation scheme, and when Q is greater than 1, it indicates the second communication apparatus to demodulate the PPDU by using a non-uniform modulation scheme. In other words, both the communication parties may learn of the uniform modulation scheme or the non-uniform modulation scheme based on a value of Q.

In another possible implementation, Q may be greater than or equal to 2 and less than or equal to K. For example, in addition to at least one of the first indication information or the second indication information, the PPDU may include third indication information. The third indication information indicates the uniform modulation scheme or the non-uniform modulation scheme. For example, the third indication information may be 1 bit. If a value of the 1 bit is 1, it indicates the second communication apparatus to use the non-uniform modulation scheme. If the value of the 1 bit is 0, it indicates the second communication apparatus to use the uniform modulation scheme. In other words, both the communication parties may learn of the uniform modulation scheme or the non-uniform modulation scheme based on the value of the third indication information.

212: The first communication apparatus sends the PPDU, and correspondingly, the second communication apparatus receives the PPDU.

213: The second communication apparatus parses the PPDU.

For example, the second communication apparatus may learn of, by parsing the first indication information in the PPDU, the first modulation scheme set and the coding rate corresponding to the first modulation scheme set. Alternatively, the second communication apparatus may learn of, by parsing the first indication information and the second indication information in the PPDU, the first modulation scheme set, the coding rate corresponding to the first modulation scheme set, and the modulation schemes corresponding to the streams. The second communication apparatus may further learn of, based on the modulation schemes corresponding to the streams, the Q modulation schemes used to demodulate the PPDU in the first modulation scheme set. Alternatively, the second communication apparatus may learn, by parsing the third indication information in the PPDU, that the first communication apparatus modulates the PPDU based on the non-uniform modulation scheme. Therefore, the second communication apparatus may demodulate the PPDU by using a corresponding demodulation scheme.

In this embodiment of this application, when the first communication apparatus and the second communication apparatus support more modulation schemes, for example, support 4096QAM, 1024QAM, 256QAM, 64QAM, 16QAM, QPSK, BPSK, and BPSK-DCM, the first communication apparatus can flexibly indicate the first modulation scheme set and the coding rate by using the first indication information. Therefore, the first modulation scheme set and the coding rate can be indicated by using fewer bits, and non-uniform modulation can be flexibly supported, to ensure a throughput.

The following describes frame formats of the PPDUs in FIG. 2a and FIG. 2b. The following frame format of a PPDU and the following format of a first SIG field are applicable to both FIG. 2a and FIG. 2b.

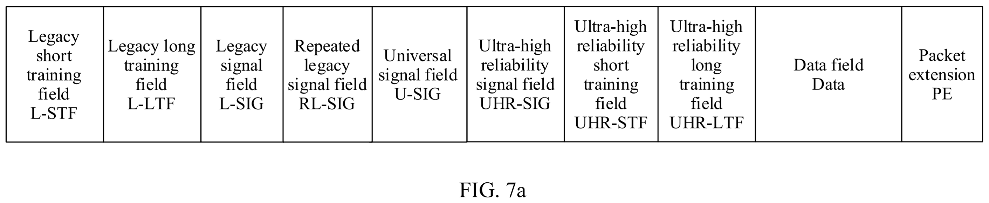

In an example, the PPDU shown in this embodiment of this application is applicable to UHR. The PPDU may be referred to as a UHR PPDU or a UHR multi-user (multiple user, MU) PPDU. FIG. 7a is a diagram of a format of a UHR PPDU according to an embodiment of this application. As shown in FIG. 7a, the UHR PPDU may include a legacy short training field (legacy short training field, L-STF), a legacy long training field (legacy long training field, L-LTF), a legacy signal (legacy signal, L-SIG) field, a repeated legacy signal (repeated L-SIG, RL-SIG) field, a universal signal (universal SIG, U-SIG) field, a UHR-SIG field, a UHR-STF, a UHR-LTF, a data (data) field, and a packet extension (packet extension, PE).

Table 14 shows functions of the fields.

Table 14

| English acronym and abbreviation | Function |
|---|---|
| L-STF | Used for PPDU discovery, coarse synchronization, and automatic gain control |
| L-LTF | Used for fine synchronization and channel estimation |
| L-SIG | Used for carrying signaling information related to a PPDU length, to ensure coexistence, where repetition of two fields is further used for automatic detection at a receive end. |
| RL-SIG | |
| U-SIG | A universal signaling field, carrying signaling used for demodulating subsequent data, where for 802.11be and a later standard, a unified signaling field may be used. |
| UHR-SIG | Used for carrying signaling used for demodulating subsequent data, and presented in different forms according to different standards |
| UHR-STF | Used for automatic gain control of a subsequent field |

(continued)

| English acronym and abbreviation | Function |
|---|---|
| UHR-LTF | Used for channel estimation |
| Data | Carrying data information |
| PE | Used for increasing a processing time of a receiver |

The foregoing specific descriptions of the fields are merely examples. In a specific implementation, the fields may alternatively have more or fewer functions, or the like. This is not limited in embodiments of this application. For example, the PPDU in this embodiment of this application is further applicable to a standard later than 802.11bn. This is not limited in embodiments of this application.

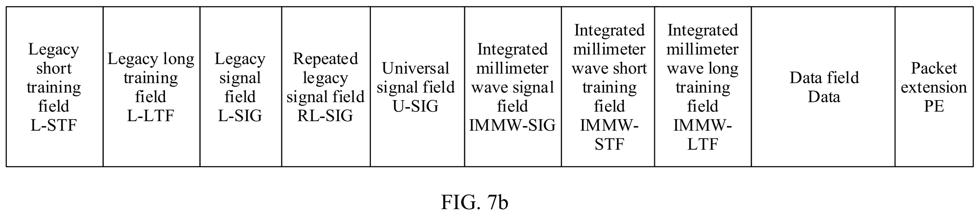

In another example, the PPDU shown in this embodiment of this application is applicable to a millimeter wave frequency band, for example, applicable to an MMW standard. The PPDU may be referred to as an IMMW PPDU or an IMMW MU PPDU. FIG. 7b is a diagram of a format of an IMMW PPDU according to an embodiment of this application. As shown in FIG. 7b, the IMMW PPDU may include an L-STF, an L-LTF, an L-SIG field, an RL-SIG field, a U-SIG field, an IMMW-SIG field, an IMMW-STF, an IMMW-LTF, a data field, and a PE. For specific descriptions of the fields, refer to FIG. 7a. Details are not described herein again.

The fields included in the UHR PPDU shown in FIG. 7a and the IMMW PPDU shown in FIG. 7b and sequences of the fields are merely examples, and should not be understood as a limitation on embodiments of this application. A name of the UHR-SIG field or the IMMW-SIG field shown in FIG. 7a and FIG. 7b is merely an example. As a standard progresses, another standard may appear subsequently, and therefore, another name may be used. This is not limited in embodiments of this application. For ease of description, the following uses the first SIG field as an example to describe the method provided in embodiments of this application. To be specific, the first SIG field may include the UHR-SIG field or the IMMW-SIG field.

The following uses an example in which the PPDU includes the first indication information and the third indication information shown in FIG. 2a and an example in which the PPDU includes the first indication information, the second indication information, and the third indication information shown in FIG. 2b for description.

For example, the PPDU shown in FIG. 7a and FIG. 7b may include the first indication information and the third indication information shown in FIG. 2a, or may include the first indication information, the second indication information, and the third indication information shown in FIG. 2b. For example, the first indication information, the second indication information, and the third indication information may all be located in a user field. For example, the user field may be carried in a user-specific field in the first SIG field in the PPDU. For another example, the third indication information is located in the U-SIG field, and the first indication information and the second indication information are located in the first SIG field. For another example, the first indication information, the second indication information, and the third indication information are all located in the U-SIG field, and the U-SIG field includes a user field. For another example, the first indication information, the second indication information, and the third indication information are all located in the first SIG field. Specific locations of the first indication information, the second indication information, and the third indication information in the PPDU are not limited in embodiments of this application. The following uses an example in which the first indication information, the second indication information, and the third indication information are located in the first SIG field of the PPDU for description.

In an example, the first indication information shown in FIG. 2a may be carried in one field in the user field, or carried in two fields in the user field, or the like. A number of fields in which the first indication information may be carried is not limited. The third indication information shown in FIG. 2a may be carried in one field in the user field, for example, occupy 1 bit.

In another example, the first indication information, the second indication information, and the third indication information shown in FIG. 2b may be respectively carried in different fields. Alternatively, the third indication information is carried in one field, the one field occupies 1 bit, and the first indication information and the second indication information belong to different subfields in a same field, or the like. A manner of carrying the indication information is not limited.

For example, the first SIG field in the PPDU may include a common field and the user-specific field. For example, the common field may include a U-SIG overflow field. The U-SIG overflow field may include some common information, for example, a spatial multiplexing parameter, a guard interval, a long training field size, a number of UHR-LTF symbols (or a number of IMMW-LTF symbols), that cannot be carried in the U-SIG field due to an insufficient number of bits. The user-specific field may include signaling information of a target user and the like. Content of the common field in the PPDU in different formats may vary. Specific content included in the common field and the user-specific field is not limited in embodiments of this application.

The first SIG field may be encoded and transmitted in frequency domain at a granularity of 20 MHz. A content channel (content channel, CC) may represent content transmitted in one 20 MHz in the first SIG field. When a PPDU bandwidth is 20 MHz, there is one CC in the first SIG field. When the PPDU bandwidth is 40 MHz, there may be two CCs in the first SIG field that are respectively a CC 1 and a CC 2 in ascending order of frequencies. Signaling fields in the two content channels are in a same format, but may have different content. When the PPDU bandwidth is 80 MHz, there are still two CCs and a total of four channels. Therefore, the two CCs are integrally on the four channels in ascending order of frequencies based on a structure of a CC 1, a CC 2, the CC 1, and the CC 2. When the PPDU bandwidth is 160 MHz or above, there are two content channels in each 80 MHz. Content of the first SIG field may be different in different 80 MHz. The foregoing descriptions of the content channel are merely examples. For example, for specific descriptions of the content channel, refer to a related standard. This is not limited in embodiments of this application.

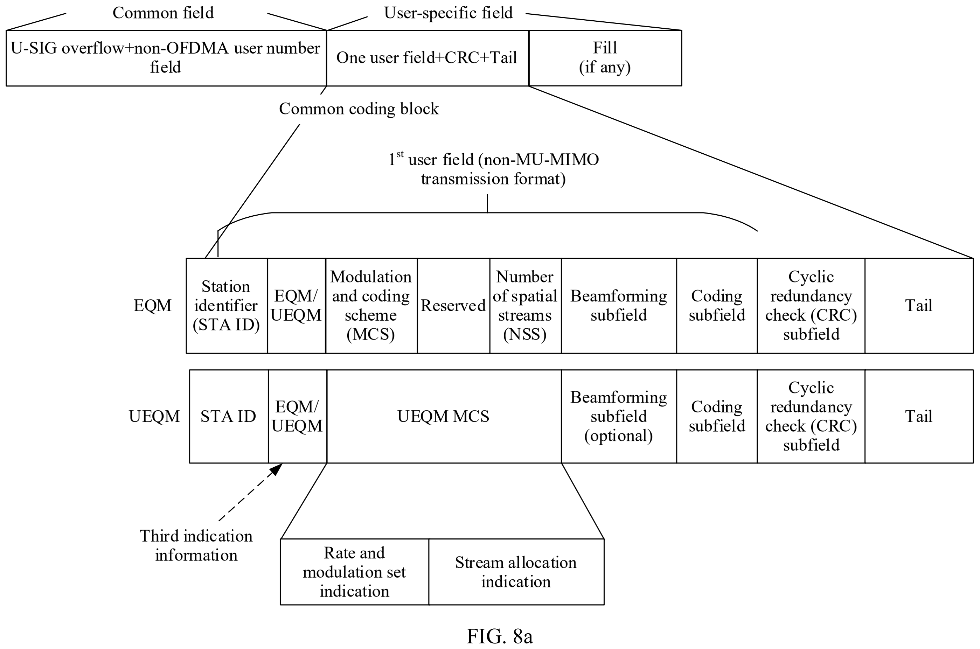

Embodiments of this application illustrate formats of two first SIG fields. FIG. 8a is a diagram of a format of a first SIG field according to an embodiment of this application. FIG. 8a shows the first SIG field for single-user transmission. In a common field, there is U-SIG overflow first. In addition, a non-OFDMA user number field may be further included, and indicates that a number of transmission users is 1. For example, in a user-specific field, there may be one user field replicated on two content channels.

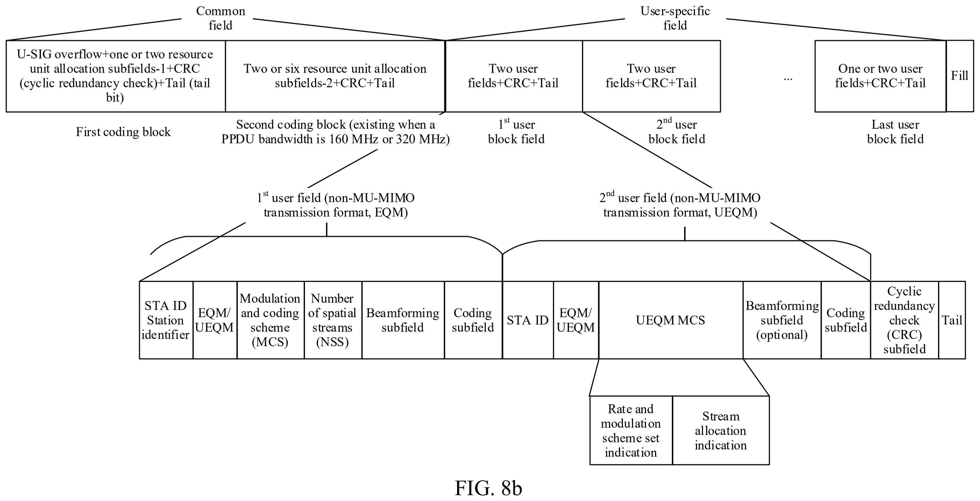

FIG. 8b is a diagram of a format of a first SIG field according to an embodiment of this application. FIG. 8b is for OFDMA transmission. In a common field, there is also U-SIG overflow first. In addition, there is further a resource unit (resource unit, RU) allocation subfield (RU allocation subfield), to allocate an RU or a multiple resource unit (multiple resource unit, MRU) (multiple resource unit) of an entire bandwidth (which is equivalent to dividing the entire bandwidth into several frequency-domain sub-bandwidths). In addition, a number of users corresponding to each RU or MRU is further indicated. For example, in a user-specific field, there may be M user fields respectively carried on two content channels.

As shown in FIG. 8a and FIG. 8b, for content carried in an EQM/UEQM field, refer to the descriptions of the third indication information. In other words, the EQM/UEQM field may indicate uniform modulation or non-uniform modulation.

When the EQM/UEQM field indicates the uniform modulation, a (non-) user field of the 1st user field shown in FIG. 8b may include at least one of the following fields: STA ID, EQM/UEQM, MCS, NSS, beamforming, coding, cyclic redundancy check (cyclic redundancy check, CRC), and tail. Content in the user field is EQM in the 1st user field (non-multi-user multiple-input multiple-output (multiple user multiple input multiple output, MU-MIMO) transmission format) shown in FIG. 8a. Alternatively, the content in the user field is the 1st user field (non-MU-MIMO transmission format, EQM) shown in FIG. 8b.

When the EQM/UEQM field indicates the non-uniform modulation, the user field may include at least one of the following fields: STA ID, EQM/UEQM, UEQM MCS, beamforming, coding, CRC, and tail. The content in the user field is UEQM in the 1st user field (non-multi-user multiple-input multiple-output (multiple user multiple input multiple output, MU-MIMO) transmission format) shown in FIG. 8a. Alternatively, the content in the user field is the 2nd user field (non-MU-MIMO transmission format, UEQM) shown in FIG. 8b.

Content carried in the UEQM MCS field may be the first indication information, or the first indication information and the second indication information. For example, a format of the UEQM MCS field shown in FIG. 8a and FIG. 8b may be shown in FIG. 4a, FIG. 4b, FIG. 5a to FIG. 5d, FIG. 6a to FIG. 6d, or the like. For a specific format of the UEQM MCS field carrying the first indication information, refer to the first indication information shown in FIG. 2a or the first indication information and the second indication information shown in FIG. 2b. When the content carried in the UEQM MCS field is the first indication information and the second indication information, also refer to FIG. 2b. For example, the UEQM MCS field may include a coding rate and modulation scheme set indication field and a stream allocation indication field. The coding rate and modulation scheme set indication field carries the first indication information, and the stream allocation indication field carries the second indication information. For specific descriptions of the first indication information and the second indication information, refer to FIG. 2b. Details are not described herein again. For related descriptions of other fields in FIG. 8a and FIG. 8b, refer to a related standard or protocol. Details are not enumerated herein. For names or descriptions of fields shown in 1st rows in FIG. 8a and FIG. 8b, refer to a related standard or protocol. For example, a resource unit allocation subfield-1 shown in FIG. 8b may also be referred to as a resource unit allocation subfield-A, and a resource unit allocation subfield-2 may also be referred to as a resource unit allocation subfield-B.

In a trigger-based PPDU, a trigger frame may include the first indication information and the third indication information shown in FIG. 2a, or include the first indication information, the second indication information, and the third indication information shown in FIG. 2b. For example, a user information field in a user information list field in the trigger frame may include at least one of the first indication information, the second indication information, or the third indication information. For example, the first communication apparatus may generate the trigger frame, and then send the trigger frame. Correspondingly, the second communication apparatus may receive the trigger frame, and parse the trigger frame. For example, the second communication apparatus may send the PPDU based on the trigger frame. The first communication apparatus receives the PPDU, and parses the PPDU.

In an example, the trigger frame may include the first indication information shown in FIG. 2a, or the trigger frame may include the first indication information and the third indication information shown in FIG. 2a.

In another example, the trigger frame may include the first indication information shown in FIG. 2b, or the trigger frame may include the first indication information and the second indication information shown in FIG. 2b, or the trigger frame may include the first indication information, the second indication information, and the third indication information shown in FIG. 2b.

For example, the second communication apparatus parses the trigger frame, may encode the PPDU by using the coding rate indicated by the trigger frame, modulate the PPDU based on the Q modulation schemes indicated by the trigger frame, and send the PPDU on a corresponding spatial stream. For example, after receiving the PPDU, the first communication apparatus parses the PPDU. For related descriptions of the trigger frame in the trigger-based PPDU, the PPDU, and the like, refer to the foregoing descriptions. Details are not described herein again.

Names of the fields shown in this embodiment of this application are examples. Specific names of the fields are not limited in embodiments of this application.

For ease of description, in some embodiments shown in this application, a "field" is used as an example for description, and the "field" and a "subfield" are not specifically distinguished. Although the "field" and the "subfield" are not specifically distinguished in embodiments shown in this application, persons skilled in the art may adaptively distinguish between relationships between the fields shown in embodiments of this application.

The following describes the communication apparatus provided in embodiments of this application.

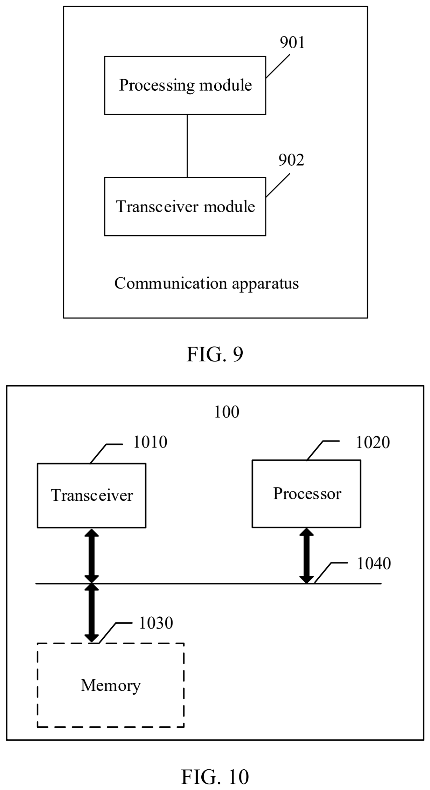

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, is merely logical function division, and may be other division during actual implementation. The following describes in detail the communication apparatus in embodiments of this application with reference to FIG. 9 to FIG. 11.

FIG. 9 is a diagram of a structure of a communication apparatus according to an embodiment of this application. As shown in FIG. 9, the communication apparatus includes a processing module 901 and a transceiver module 902. The transceiver module 902 may implement a corresponding communication function, and the processing module 901 is configured to process data. For example, the transceiver module 902 may also be referred to as a communication interface or a communication module.

In some embodiments of this application, the communication apparatus may be configured to perform the actions performed by the first communication apparatus in the foregoing method embodiments. In this case, the communication apparatus may be a WLAN device, or a chip or a functional module configured in the WLAN device, or the like. The transceiver module 902 is configured to perform receiving and sending-related operations of the first communication apparatus in the foregoing method embodiments. The processing module 901 is configured to perform processing-related operations of the first communication apparatus in the foregoing method embodiments.

For example, the processing module 901 is configured to generate a PPDU; and the transceiver module 902 is configured to send or output the PPDU.

It may be understood that the transceiver module 902 may send the PPDU to another communication apparatus, or the transceiver module 902 outputs the PPDU from the processing module 901 to another component or another functional module in the first communication apparatus. Related descriptions of outputting other information by the transceiver module are similar. Details are not described below again.

In some other embodiments of this application, the communication apparatus may be configured to perform the actions performed by the second communication apparatus in the foregoing method embodiments. In this case, the communication apparatus may be a WLAN device, or a chip or a functional module configured in the WLAN device, or the like. The transceiver module 902 is configured to perform receiving and sending-related operations of the second communication apparatus in the foregoing method embodiments. The processing module 901 is configured to perform processing-related operations of the second communication apparatus in the foregoing method embodiments.

The transceiver module 902 is configured to receive or input the PPDU. The processing module 901 is configured to parse the PPDU.

Optionally, the communication apparatus may further include a storage module. The storage module may be configured to store instructions and/or data. The processing module 901 may read the instructions and/or the data in the storage module, to enable the communication apparatus to implement the foregoing method embodiments. For example, the storage module may be configured to store at least one piece of information in Table 2 to Table 14 above.

It may be understood that the specific descriptions of the transceiver module and the processing module shown in this embodiment of this application are merely examples. For specific functions, steps, or the like performed by the transceiver module and the processing module, refer to the foregoing method embodiments. Details are not described herein again.

In the foregoing embodiments, for descriptions of the PPDU, first indication information, second indication information, third indication information, and the like, further refer to the descriptions in the foregoing method embodiments. Details are not described herein again.

The foregoing describes the communication apparatus in embodiments of this application. The following describes a possible product form of the communication apparatus. It should be understood that any form of product that has a function of the communication apparatus in FIG. 9 falls within the protection scope of embodiments of this application. It should be further understood that the following descriptions are merely examples, and do not limit the product form of the communication apparatus in embodiments of this application.

In a possible implementation, in the communication apparatus shown in FIG. 9, the processing module 901 may be one or more processors, and the transceiver module 902 may be a transceiver; or the transceiver module 902 may be a sending module and a receiving module, the sending module may be a transmitter, and the receiving module may be a receiver, the sending module and the receiving module are integrated into one device, for example, a transceiver. In this embodiment of this application, the processor and the transceiver may be coupled to each other or the like. A manner of connecting the processor to the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information, and then processed information is received by the processor.

As shown in FIG. 10, a communication apparatus 100 includes one or more processors 1020 and a transceiver 1010.

In some embodiments of this application, the communication apparatus may be configured to perform the steps, the functions, or the like performed by the first communication apparatus in the foregoing method embodiments.

For example, the processor 1020 is configured to generate a PPDU; and the transceiver 1010 is configured to send the PPDU.

In some other embodiments of this application, the communication apparatus may be configured to perform the steps, the functions, or the like performed by the second communication apparatus in the foregoing method embodiments.

The transceiver 1010 is configured to receive the PPDU. The processor 1020 is configured to parse the PPDU.

It may be understood that the specific descriptions of the transceiver and the processor shown in this embodiment of this application are merely examples. For specific functions, steps, or the like performed by the transceiver and the processor, refer to the foregoing method embodiments. Details are not described herein again.

In the foregoing embodiments, for descriptions of the PPDU, first indication information, second indication information, third indication information, and the like, further refer to the descriptions in the foregoing method embodiments. Details are not described herein again.

In implementations of the communication apparatus shown in FIG. 10, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 100 may further include one or more memories 1030, configured to store program instructions, data, and/or the like. The memory 1030 is coupled to the processor 1020. The coupling in this embodiment of this application may be an indirect coupling or a communication connection between apparatuses, units, or modules, may be in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor. For example, the memory may be configured to store information such as at least one of Table 2 to Table 14.

A specific connection medium between the transceiver 1010, the processor 1020, and the memory 1030 is not limited in embodiments of this application. In this embodiment of this application, the memory 1030, the processor 1020, and the transceiver 1010 are connected to each other through a bus 1040 in FIG. 10. The bus is represented by using a bold line in FIG. 10. A manner of a connection between other components is merely an example for description, and is not limited thereto. The bus may be classified into an address bus, a data bus, a control bus, and the like. For ease of representation, only one bold line is used for representation in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like, and may implement or execute the methods, the steps, and the logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by using a combination of hardware and a software module in the processor, or the like.

In this embodiment of this application, the memory may include but is not limited to a non-volatile memory like a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), a compact disc read-only memory (compact disc read-only memory, CD-ROM), or the like. The memory is any storage medium that can be used to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store program instructions and/or data.

For example, the processor 1020 is mainly configured to: process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to: perform conversion between a baseband signal and a radio frequency signal and process the radio frequency signal. The antenna is mainly configured to: receive and send radio frequency signals in a form of an electromagnetic wave. An input/output apparatus, for example, a touchscreen, a display, or a keyboard, is mainly configured to: receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independently of the communication apparatus.

It may be understood that the communication apparatus described in this embodiment of this application may alternatively include more components than those in FIG. 10, or the like. This is not limited in embodiments of this application. The methods performed by the processor and the transceiver are merely examples. For specific steps performed by the processor and the transceiver, refer to the methods described above.

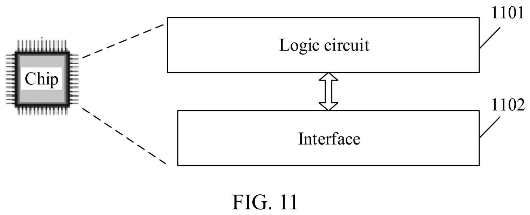

In another possible implementation, in the communication apparatus shown in FIG. 9, the processing module 901 may be one or more logic circuits, and the transceiver module 902 may be an input/output interface, or may be referred to as a communication interface, an interface circuit, an interface, or the like. Alternatively, the transceiver module 902 may be a sending module and a receiving module. The sending module may be an output interface, and the receiving module may be an input interface. The sending module and the receiving module are integrated into one module, for example, an input/output interface. As shown in FIG. 11, a communication apparatus shown in FIG. 11 includes a logic circuit 1101 and an interface 1102. To be specific, the processing module 901 may be implemented by using the logic circuit 1101, and the transceiver module 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 shows an example in which the communication apparatus is a chip. The chip includes the logic circuit 1101 and the interface 1102.

In this embodiment of this application, the logic circuit and the interface may be coupled to each other. A specific manner of connecting the logic circuit to the interface is not limited in embodiments of this application.

In some embodiments of this application, the communication apparatus may be configured to perform the steps, the functions, or the like performed by the first communication apparatus in the foregoing method embodiments.

For example, the logic circuit 1101 is configured to generate a PPDU; and the interface 1102 is configured to output the PPDU.

In some other embodiments of this application, the communication apparatus may be configured to perform the steps, the functions, or the like performed by the second communication apparatus in the foregoing method embodiments.

The interface 1102 is configured to input the PPDU, and the logic circuit 1101 is configured to parse the PPDU.

It may be understood that the specific descriptions of the logic circuit and the interface shown in this embodiment of this application are merely examples. For specific functions, steps, or the like performed by the logic circuit and the interface, refer to the foregoing method embodiments. Details are not described herein again.

For example, the chip may further include a memory. The memory may be configured to store information such as at least one of Table 2 to Table 14.

In the foregoing embodiments, for descriptions of the PPDU, first indication information, second indication information, third indication information, and the like, further refer to the descriptions in the foregoing method embodiments. Details are not described herein again.

It may be understood that the communication apparatus shown in this embodiment of this application may implement the methods provided in embodiments of this application in a form of hardware, or may implement the methods provided in embodiments of this application in a form of software, or the like. This is not limited in embodiments of this application.

An embodiment of this application further provides a communication system. The communication system includes a first communication apparatus and a second communication apparatus. For descriptions of the first communication apparatus and the second communication apparatus, refer to the foregoing descriptions.

In addition, this application further provides a computer program. The computer program is used to implement the operations and/or processing performed by the first communication apparatus in the methods provided in this application.

This application further provides a computer program. The computer program is used to implement the operations and/or processing performed by the second communication apparatus in the methods provided in this application.

This application further provides a computer-readable storage medium. The computer-readable storage medium stores computer code. When the computer code is run on a computer, the computer is enabled to perform the operations and/or processing performed by the first communication apparatus in the methods provided in this application.

This application further provides a computer-readable storage medium. The computer-readable storage medium stores computer code. When the computer code is run on a computer, the computer is enabled to perform the operations and/or processing performed by the second communication apparatus in the methods provided in this application.

This application further provides a computer program product. The computer program product includes computer code or a computer program. When the computer code or the computer program is run on a computer, the operations and/or processing performed by the first communication apparatus in the methods provided in this application are/is performed.

This application further provides a computer program product. The computer program product includes computer code or a computer program. When the computer code or the computer program is run on a computer, the operations and/or processing performed by the second communication apparatus in the methods provided in this application are/is performed.

In the several embodiments provided in this application, it should be understood that the disclosed system, apparatuses, and methods may be implemented in other manners. For example, the described apparatus embodiments are merely examples. For example, division into the modules may be logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and the parts displayed as modules may or may not be physical modules, that is, may be located in one place, or may be distributed on a plurality of network modules. A part or all of the modules may be selected based on an actual requirement, to achieve technical effect of the solutions provided in embodiments of this application.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

The integrated module may be stored in a computer-readable storage medium when the integrated module is implemented in the form of the software functional module and sold or used as an independent product. Based on such an understanding, the technical solutions of this application essentially, or the part contributing to the conventional technologies, or all or a part of the technical solutions may be implemented in a form of a software product. The computer software product is stored in a readable storage medium and includes several instructions for instructing a computer device (which may be a personal computer, a server, a network device, or the like) to perform all or a part of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art in the technical scope disclosed in this application shall fall within the protection scope of this application. Therefore, the protection scope of this application shall be subject to the protection scope of the claims.

**Claims**

1. A communication method, wherein the method comprises:

    generating, by a first communication apparatus, a physical protocol data unit PPDU, wherein the PPDU comprises first indication information, the first indication information indicates Q modulation schemes in W modulation schemes, a difference between numbers of modulation bits of modulation symbols of any two modulation schemes in the Q modulation schemes is less than a first value, the W modulation schemes comprise at least one of the following: 4096 quadrature amplitude modulation QAM, 1024QAM, 256QAM, and binary phase shift keying-dual carrier modulation BPSK-DCM, and Q is a positive integer less than W; and
    sending, by the first communication apparatus, the PPDU.

2. A communication method, wherein the method comprises:

    receiving, by a second communication apparatus, a physical protocol data unit PPDU, wherein the PPDU comprises first indication information, the first indication information indicates Q modulation schemes in W modulation schemes, a difference between numbers of modulation bits of modulation symbols of any two modulation schemes in the Q modulation schemes is less than a first value, the W modulation schemes comprise at least one of the following: 4096 quadrature amplitude modulation QAM, 1024QAM, 256QAM, and binary phase shift keying-dual carrier modulation BPSK-DCM, and Q is a positive integer less than W; and
    parsing, by the second communication apparatus, the PPDU.

3. The method according to claim 1 or 2, wherein the first indication information indicates the second communication apparatus to demodulate the PPDU based on the Q modulation schemes.

4. The method according to any one of claims 1 to 3, wherein the W modulation schemes further comprise at least one of the following: 64QAM, 16QAM, quadrature phase shift keying QPSK, and BPSK.

5. The method according to any one of claims 1 to 4, wherein the first value is 10, or the first value is 8.

6. The method according to any one of claims 1 to 5, wherein the W modulation schemes are classified into N modulation scheme sets, each modulation scheme set comprises K adjacent modulation schemes, the N modulation scheme sets comprise a first modulation scheme set, the K adjacent modulation schemes in the first modulation scheme set comprise the Q modulation schemes, and Q is less than or equal to K.

7. The method according to any one of claims 1 to 6, wherein the first indication information further indicates a coding rate corresponding to the Q modulation schemes.

8. The method according to any one of claims 1 to 7, wherein the first indication information further indicates a spatial stream corresponding to each of the Q modulation schemes.

9. The method according to claim 8, wherein the first indication information comprises a modulation and coding scheme MCS index, and the MCS index indicates at least one of the coding rate or the spatial streams corresponding to the Q modulation schemes.

10. The method according to any one of claims 1 to 6, wherein the first indication information comprises T bits, and a value of the T bits is a modulation and coding scheme MCS index; and

    the MCS index indicates the first modulation scheme set and a coding rate corresponding to the first modulation scheme set; or
    the MCS index indicates one modulation scheme in the first modulation scheme set and the coding rate corresponding to the first modulation scheme set.

11. The method according to claim 10, wherein that the MCS index indicates the one modulation scheme in the first modulation scheme set comprises:

K=2, and the MCS index indicates a highest-order modulation scheme in the first modulation scheme set or a lowest-order modulation scheme in the first modulation scheme set; or

K=3, and the MCS index indicates a highest-order modulation scheme in the first modulation scheme set, or an intermediate-order modulation scheme in the first modulation scheme set, or a lowest-order modulation scheme in the first modulation scheme set; or

K=4, and the MCS index indicates a highest-order modulation scheme in the first modulation scheme set, or a second-highest-order modulation scheme in the first modulation scheme set, or a third-highest-order modulation scheme in the first modulation scheme set, or a lowest-order modulation scheme in the first modulation scheme set.

12. The method according to claim 10 or 11, wherein the first indication information further indicates an index of a spatial stream corresponding to a modulation scheme in the first modulation scheme set.

13. The method according to claim 12, wherein the first indication information further comprises K spatial stream indication fields, the K spatial stream indication fields comprise a first spatial stream indication field, the first spatial stream indication field indicates an index of a spatial stream corresponding to a first modulation scheme, and the first modulation scheme is one of the K adjacent modulation schemes.

14. The method according to claim 13, wherein a value carried in the first spatial stream indication field is $S_i$, $S_i$ represents a maximum index of the spatial stream corresponding to the first modulation scheme, $S_i$ is an integer greater than or equal to 0 and less than or equal to $N_{ss}-1$, $N_{ss}$ is a total number of spatial streams, and i is an integer greater than or equal to 0 and less than or equal to K-1; and

the index of the spatial stream corresponding to the first modulation scheme is less than or equal to $S_i$; or
the index of the spatial stream corresponding to the first modulation scheme is greater than $S_{i-1}$ and less than or equal to $S_i$, $S_{i-1}$ is a value carried in a second spatial stream indication field, and $S_{i-1}$ is less than or equal to $S_i$.

15. The method according to claim 10 or 11, wherein the first indication information further indicates a number of spatial streams corresponding to a modulation scheme in the first modulation scheme set.

16. The method according to claim 15, wherein the first indication information further comprises K spatial stream indication fields, the K spatial stream indication fields comprise a first spatial stream indication field, the first spatial stream indication field indicates a number of spatial streams of a first modulation scheme, and the first modulation scheme is one of the K adjacent modulation schemes.

17. The method according to claim 16, wherein a value carried in the first spatial stream indication field is $S_i$, $S_i$ represents the number of spatial streams corresponding to the first modulation scheme, $S_i$ is an integer greater than or equal to 0 and less than or equal to $N_{ss}-1$, $N_{ss}$ is a total number of spatial streams, and i is an integer greater than or equal to 0 and less than or equal to K-1.

18. The method according to claim 12, wherein the first indication information further comprises information about Nss and K-1 spatial stream indication fields, the K-1 spatial stream indication fields comprise a first spatial stream indication field, the first spatial stream indication field indicates an index of a spatial stream of a first modulation scheme, the first modulation scheme is one of the K adjacent modulation schemes other than a lowest-order modulation scheme, and Nss represents a total number of spatial streams.

19. The method according to claim 18, wherein a value carried in the first spatial stream indication field is $S_i$, $S_i$ represents a maximum index of the spatial stream corresponding to the first modulation scheme, $S_i$ is an integer greater than or equal to 0 and less than or equal to $N_{ss}-1$, $N_{ss}$ is the total number of spatial streams, and i is an integer greater than or equal to 0 and less than or equal to K-2; and

the index of the spatial stream corresponding to the first modulation scheme is less than or equal to $S_i$; or
the index of the spatial stream corresponding to the first modulation scheme is greater than $S_{i-1}$ and less than or equal to $S_i$, $S_{i-1}$ is a value carried in a second spatial stream indication field, and $S_{i-1}$ is less than or equal to $S_i$.

20. The method according to claim 15, wherein the first indication information further comprises information about Nss and K-1 spatial stream indication fields, the K-1 spatial stream indication fields comprise a first spatial stream indication field, the first spatial stream indication field indicates a number of spatial streams of a first modulation scheme, the first modulation scheme is one of the K adjacent modulation schemes other than a lowest-order modulation scheme, and Nss represents a total number of spatial streams.

21. The method according to claim 20, wherein a value carried in the first spatial stream indication field is $S_i$, $S_i$ represents the number of spatial streams corresponding to the first modulation scheme, $S_i$ is an integer greater than or equal to 0 and less than or equal to $N_{ss}$-1, $N_{ss}$ is the total number of spatial streams, and i is an integer greater than or equal to 0 and less than or equal to K-2.

22. The method according to any one of claims 13 to 21, wherein rankings of modulation schemes corresponding to the K spatial stream indication fields successively correspond to rankings of the K adjacent modulation schemes in the first modulation scheme set; or
rankings of modulation schemes corresponding to the K-1 spatial stream indication fields successively correspond to rankings of K-1 adjacent modulation schemes in the first modulation scheme set, and the K-1 adjacent modulation schemes are K-1 modulation schemes other than the lowest-order modulation scheme in the first modulation scheme set.

23. The method according to any one of claims 1 to 5, wherein the Q modulation schemes are Q modulation schemes in K adjacent modulation schemes, K=3, and Q=1, or Q=2, or Q=3.

24. The method according to any one of claims 1 to 5, wherein the Q modulation schemes are Q modulation schemes in K adjacent modulation schemes, K=3, and Q=1, or Q=2, or Q=3; and
the K adjacent modulation schemes are any one of the following:

{QPSK, BPSK, BPSK-DCM};
{16QAM, QPSK, BPSK};
{64QAM, 16QAM, QPSK};
{256QAM, 64QAM, 16QAM};
{1024QAM, 256QAM, 64QAM}; and
{4096QAM, 1024QAM, 256QAM}.

25. The method according to any one of claims 1 to 5, wherein Q=2, and the Q modulation schemes are any one of the following:

{BPSK, BPSK-DCM};
{QPSK, BPSK-DCM};
{QPSK, BPSK};
{16QAM, BPSK};
{16QAM, QPSK};
{64QAM, QPSK};
{64QAM, 16QAM};
{256QAM, 16QAM};
{256QAM, 64QAM};
{1024QAM, 64QAM};
{1024QAM, 256QAM};
{4096QAM, 256QAM}; and
{4096QAM, 1024QAM}.

26. The method according to any one of claims 1 to 5, wherein Q=3, and the Q modulation schemes are any one of the following:

{QPSK, BPSK, BPSK-DCM};
{16QAM, QPSK, BPSK};
{64QAM, 16QAM, QPSK};
{256QAM, 64QAM, 16QAM};
{1024QAM, 256QAM, 64QAM}; and
{4096QAM, 1024QAM, 256QAM}.

27. The method according to any one of claims 23 to 26, wherein a difference between a number of modulation bits of a modulation symbol of a highest-order modulation scheme and a number of modulation bits of a modulation symbol of a lowest-order modulation scheme in the K adjacent modulation schemes is less than or equal to 4.

28. A communication method, wherein the method comprises:

generating, by a first communication apparatus, a physical protocol data unit PPDU, wherein the PPDU comprises first indication information, the first indication information indicates a first modulation scheme set and a coding rate corresponding to the first modulation scheme set, the first modulation scheme set is one of N modulation scheme sets, the N modulation scheme sets are obtained through division based on K adjacent modulation schemes in the following modulation schemes: 4096 quadrature amplitude modulation QAM, 1024QAM, 256QAM, 64QAM, 16QAM, quadrature phase shift keying QPSK, binary phase shift keying BPSK, and binary phase shift keying-dual carrier modulation BPSK-DCM, Q modulation schemes in the K adjacent modulation schemes in the first modulation scheme set are used to modulate the PPDU, the PPDU is encoded based on the coding rate, Q is less than or equal to K, and N, Q, and K are all positive integers; and
sending, by the first communication apparatus, the PPDU.

29. A communication method, wherein the method comprises:

receiving, by a second communication apparatus, a physical protocol data unit PPDU, wherein the PPDU comprises first indication information, the first indication information indicates a first modulation scheme set and a coding rate corresponding to the first modulation scheme set, the first modulation scheme set is one of N modulation scheme sets, the N modulation scheme sets are obtained through division based on K adjacent modulation schemes in the following modulation schemes: 4096 quadrature amplitude modulation QAM, 1024QAM, 256QAM, 64QAM, 16QAM, quadrature phase shift keying QPSK, binary phase shift keying BPSK, and binary phase shift keying-dual carrier modulation BPSK-DCM, Q modulation schemes in the K adjacent modulation schemes in the first modulation scheme set are used to modulate the PPDU, the PPDU is encoded based on the coding rate, Q is less than or equal to K, and N, Q, and K are all positive integers; and
parsing, by the second communication apparatus, the PPDU.

30. The method according to claim 28 or 29, wherein each of the N modulation scheme sets comprises the K adjacent modulation schemes.

31. The method according to any one of claims 28 to 30, wherein

the first modulation scheme set is any one of the following: {BPSK, BPSK-DCM}; {QPSK, BPSK}; {16QAM, QPSK}; {64QAM, 16QAM}; {256QAM, 64QAM}; {1024QAM, 256QAM}; and {4096QAM, 1024QAM}; or
the first modulation scheme set is any one of the following: {QPSK, BPSK, BPSK-DCM}; {16QAM, QPSK, BPSK}; {64QAM, 16QAM, QPSK}; {256QAM, 64QAM, 16QAM}; {1024QAM, 256QAM, 64QAM}; and {4096QAM, 1024QAM, 256QAM}; or
the first modulation scheme set is any one of the following: {16QAM, QPSK, BPSK, BPSK-DCM}; {64QAM, 16QAM, QPSK, BPSK}; {256QAM, 64QAM, 16QAM, QPSK}; {1024QAM, 256QAM, 64QAM, 16QAM}; and {4096QAM, 1024QAM, 256QAM, 64QAM}.

32. The method according to any one of claims 28 to 31, wherein the first indication information comprises T bits, and a value of the T bits is a modulation and coding scheme MCS index; and

the MCS index indicates the first modulation scheme set and the coding rate corresponding to the first modulation scheme set; or
the MCS index indicates one modulation scheme in the first modulation scheme set and the coding rate corresponding to the first modulation scheme set.

33. The method according to claim 32, wherein that the MCS index indicates the one modulation scheme in the first modulation scheme set comprises:

K=2, and the MCS index indicates a highest-order modulation scheme in the first modulation scheme set or a lowest-order modulation scheme in the first modulation scheme set; or
K=3, and the MCS index indicates a highest-order modulation scheme in the first modulation scheme set, or an intermediate-order modulation scheme in the first modulation scheme set, or a lowest-order modulation scheme in the first modulation scheme set; or

K=4, and the MCS index indicates a highest-order modulation scheme in the first modulation scheme set, or a second-highest-order modulation scheme in the first modulation scheme set, or a third-highest-order modulation scheme in the first modulation scheme set, or a lowest-order modulation scheme in the first modulation scheme set.

34. The method according to any one of claims 28 to 33, wherein the PPDU further comprises second indication information, and the second indication information indicates an index of a spatial stream corresponding to a modulation scheme in the first modulation scheme set.

35. The method according to claim 34, wherein the second indication information comprises K spatial stream indication fields, the K spatial stream indication fields comprise a first spatial stream indication field, the first spatial stream indication field indicates an index of a spatial stream corresponding to a first modulation scheme, and the first modulation scheme is one of the K adjacent modulation schemes.

36. The method according to claim 35, wherein a value carried in the first spatial stream indication field is $S_i$, $S_i$ represents a maximum index of the spatial stream corresponding to the first modulation scheme, $S_i$ is an integer greater than or equal to 0 and less than or equal to $N_{ss}$-1, $N_{ss}$ is a total number of spatial streams, and i is an integer greater than or equal to 0 and less than or equal to K-1; and

the index of the spatial stream corresponding to the first modulation scheme is less than or equal to $S_i$; or
the index of the spatial stream corresponding to the first modulation scheme is greater than $S_{i-1}$ and less than or equal to $S_i$, $S_{i-1}$ is a value carried in a second spatial stream indication field, and $S_{i-1}$ is less than or equal to $S_i$.

37. The method according to any one of claims 28 to 33, wherein the PPDU further comprises second indication information, and the second indication information indicates a number of spatial streams corresponding to a modulation scheme in the first modulation scheme set.

38. The method according to claim 37, wherein the second indication information comprises K spatial stream indication fields, the K spatial stream indication fields comprise a first spatial stream indication field, the first spatial stream indication field indicates a number of spatial streams corresponding to a first modulation scheme, and the first modulation scheme is one of the K adjacent modulation schemes.

39. The method according to claim 38, wherein a value carried in the first spatial stream indication field is $S_i$, $S_i$ represents the number of spatial streams corresponding to the first modulation scheme, $S_i$ is an integer greater than or equal to 0 and less than or equal to $N_{ss}$-1, $N_{ss}$ is a total number of spatial streams, and i is an integer greater than or equal to 0 and less than or equal to K-1.

40. The method according to claim 34, wherein the second indication information comprises information about Nss and K-1 spatial stream indication fields, the K-1 spatial stream indication fields comprise a first spatial stream indication field, the first spatial stream indication field indicates an index of a spatial stream of a first modulation scheme, the first modulation scheme is one of the K adjacent modulation schemes other than a lowest-order modulation scheme, and Nss represents a total number of spatial streams.

41. The method according to claim 40, wherein a value carried in the first spatial stream indication field is $S_i$, $S_i$ represents a maximum index of the spatial stream corresponding to the first modulation scheme, $S_i$ is an integer greater than or equal to 0 and less than or equal to $N_{ss}$-1, $N_{ss}$ is the total number of spatial streams, and i is an integer greater than or equal to 0 and less than or equal to K-2; and

the index of the spatial stream corresponding to the first modulation scheme is less than or equal to $S_i$; or
the index of the spatial stream corresponding to the first modulation scheme is greater than $S_{i-1}$ and less than or equal to $S_i$, $S_{i-1}$ is a value carried in a second spatial stream indication field, and $S_{i-1}$ is less than or equal to $S_i$.

42. The method according to claim 37, wherein the second indication information comprises information about Nss and K-1 spatial stream indication fields, the K-1 spatial stream indication fields comprise a first spatial stream indication field, the first spatial stream indication field indicates a number of spatial streams of a first modulation scheme, the first modulation scheme is one of the K adjacent modulation schemes other than a lowest-order modulation scheme, and Nss represents a total number of spatial streams.

**43.** The method according to claim 42, wherein a value carried in the first spatial stream indication field is $S_i$, $S_i$ represents the number of spatial streams corresponding to the first modulation scheme, $S_i$ is an integer greater than or equal to 0 and less than or equal to $N_{ss}-1$, $N_{ss}$ is the total number of spatial streams, and i is an integer greater than or equal to 0 and less than or equal to K-2.

**44.** The method according to any one of claims 35 to 43, wherein rankings of modulation schemes corresponding to the K spatial stream indication fields successively correspond to rankings of the K adjacent modulation schemes in the first modulation scheme set; or

rankings of modulation schemes corresponding to the K-1 spatial stream indication fields successively correspond to rankings of K-1 adjacent modulation schemes in the first modulation scheme set, and the K-1 adjacent modulation schemes are K-1 modulation schemes other than the lowest-order modulation scheme in the first modulation scheme set.

**45.** The method according to any one of claims 28 to 44, wherein the first indication information and the second indication information are carried in a user field of the PPDU.

**46.** A communication apparatus, comprising a module configured to perform the method according to any one of claims 1 to 45.

**47.** A communication apparatus, comprising a processor, wherein the processor is configured to perform the method according to any one of claims 1 to 45.

**48.** A communication apparatus, comprising a logic circuit and an interface, wherein the logic circuit is coupled to the interface; and

the interface is configured to input and/or output code instructions, and the logic circuit is configured to execute the code instructions, so that the method according to any one of claims 1 to 45 is performed.

**49.** A computer-readable storage medium, wherein the computer-readable storage medium is configured to store a computer program, and when the computer program is executed, the method according to any one of claims 1 to 45 is performed.

**50.** A communication system, wherein the communication system comprises a first communication apparatus and a second communication apparatus, the first communication apparatus is configured to perform the method according to any one of claims 1 and 3 to 27, and the second communication apparatus is configured to perform the method according to any one of claims 2 to 27; or the first communication apparatus is configured to perform the method according to any one of claims 28 and 30 to 45, and the second communication apparatus is configured to perform the method according to any one of claims 29 to 45.

FIG. 1

FIG. 2a

| First communication apparatus | | Second communication apparatus |
|---|---|---|

Generate a PPDU, where the PPDU includes first indication information, and the first indication information indicates a first modulation scheme set and a coding rate corresponding to the first modulation scheme set — 211

PPDU — 212

Parse the PPDU — 213

FIG. 2b

FIG. 3

Indicate Q modulation schemes
(bitmap)

Indicate R
(index)

| B0 | B1 | B2 | B3 | B4 | B5 | B6 | B7 | B8 | B9 |
|----|----|----|----|----|----|----|----|----|----|

FIG. 4a

Indicate Q modulation schemes
(bitmap)

Indicate R
(bitmap)

| B0 | B1 | B2 | B3 | B4 | B5 | B6 | B7 | B8 | B9 | B10 | B11 |
|----|----|----|----|----|----|----|----|----|----|-----|-----|

FIG. 4b

Indicate Q modulation schemes (N=7)

Indicate a first
modulation scheme set

Indicate the Q
modulation schemes
(bitmap)

Indicate R
(index)

| B0 | B1 | B2 | B3 | B4 | B5 | B6 |
|----|----|----|----|----|----|----|

FIG. 5a

Indicate Q modulation schemes (N=6)

Indicate a first
modulation scheme set

Indicate the Q
modulation schemes
(bitmap)

Indicate R
(index)

| B0 | B1 | B2 | B3 | B4 | B5 | B6 | B7 |
|----|----|----|----|----|----|----|----|

FIG. 5b

Indicate Q modulation schemes (N=5)

| Indicate a first modulation scheme set | | | Indicate the Q modulation schemes (bitmap) | | | | Indicate R (index) | |
|---|---|---|---|---|---|---|---|---|
| B0 | B1 | B2 | B3 | B4 | B5 | B6 | B7 | B8 |

FIG. 5c

Indicate Q modulation schemes (N=4)

| Indicate a first modulation scheme set | | Indicate the Q modulation schemes (bitmap) | | | | Indicate R (index) | |
|---|---|---|---|---|---|---|---|
| B0 | B1 | B2 | B3 | B4 | B5 | B6 | B7 |

FIG. 5d

Indicate Q modulation schemes (N=7)

| Indicate a first modulation scheme set | | | Indicate the Q modulation schemes (bitmap) | | Indicate R (bitmap) | | | |
|---|---|---|---|---|---|---|---|---|
| B0 | B1 | B2 | B3 | B4 | B5 | B6 | B7 | B8 |

FIG. 6a

Indicate Q modulation schemes (N=6)

| Indicate a first modulation scheme set | | | Indicate the Q modulation schemes (bitmap) | | | Indicate R (bitmap) | | | |
|---|---|---|---|---|---|---|---|---|---|
| B0 | B1 | B2 | B3 | B4 | B5 | B6 | B7 | B8 | B9 |

FIG. 6b

Indicate Q modulation schemes (N=5)

| Indicate a first modulation scheme set | | | Indicate the Q modulation schemes (bitmap) | | | | Indicate R (bitmap) | | | |
|---|---|---|---|---|---|---|---|---|---|---|
| B0 | B1 | B2 | B3 | B4 | B5 | B6 | B7 | B8 | B9 | B10 |

FIG. 6c

Indicate Q modulation schemes (N=4)

| Indicate a first modulation scheme set | | Indicate the Q modulation schemes (bitmap) | | | | Indicate R (bitmap) | | | |
|---|---|---|---|---|---|---|---|---|---|
| B0 | B1 | B2 | B3 | B4 | B5 | B6 | B7 | B8 | B9 |

FIG. 6d

| Legacy short training field L-STF | Legacy long training field L-LTF | Legacy signal field L-SIG | Repeated legacy signal field RL-SIG | Universal signal field U-SIG | Ultra-high reliability signal field UHR-SIG | Ultra-high reliability short training field UHR-STF | Ultra-high reliability long training field UHR-LTF | Data field Data | Packet extension PE |
|---|---|---|---|---|---|---|---|---|---|

FIG. 7a

EP 4 718 794 A1

| Legacy short training field L-STF | Legacy long training field L-LTF | Legacy signal field L-SIG | Repeated legacy signal field RL-SIG | Universal signal field U-SIG | Integrated millimeter wave signal field IMMW-SIG | Integrated millimeter wave short training field IMMW-STF | Integrated millimeter wave long training field IMMW-LTF | Data field Data | Packet extension PE |
|---|---|---|---|---|---|---|---|---|---|

FIG. 7b

Common field | User-specific field

| U-SIG overflow+non-OFDMA user number field | One user field+CRC+Tail | Fill (if any) |

Common coding block

1st user field (non-MU-MIMO transmission format)

EQM

| Station identifier (STA ID) | EQM/ UEQM | Modulation and coding scheme (MCS) | Reserved | Number of spatial streams (NSS) | Beamforming subfield | Coding subfield | Cyclic redundancy check (CRC) subfield | Tail |

UEQM

| STA ID | EQM/ UEQM | UEQM MCS | | Beamforming subfield (optional) | Coding subfield | Cyclic redundancy check (CRC) subfield | Tail |

Third indication information

| Rate and modulation set indication | Stream allocation indication |

FIG. 8a

EP 4 718 794 A1

Common field

User-specific field

| U-SIG overflow+one or two resource unit allocation subfields-1+CRC (cyclic redundancy check)+Tail (tail bit) | Two or six resource unit allocation subfields-2+CRC+Tail | Two user fields+CRC+Tail | Two user fields+CRC+Tail | ... | One or two user fields+CRC+Tail | Fill |

First coding block

Second coding block (existing when a PPDU bandwidth is 160 MHz or 320 MHz)

$1^{st}$ user block field

$2^{nd}$ user block field

Last user block field

$1^{st}$ user field (non-MU-MIMO transmission format, EQM)

$2^{nd}$ user field (non-MU-MIMO transmission format, UEQM)

| STA ID Station identifier | EQM/ UEQM | Modulation and coding scheme (MCS) | Number of spatial streams (NSS) | Beamforming subfield | Coding subfield | STA ID | EQM/ UEQM | UEQM MCS | Beamforming subfield (optional) | Coding subfield | Cyclic redundancy check (CRC) subfield | Tail |

| Rate and modulation scheme set indication | Stream allocation indication |

FIG. 8b

901

Processing module

902

Transceiver module

Communication apparatus

FIG. 9

100

1010

Transceiver

1020

Processor

1040

1030

Memory

FIG. 10

Chip

Logic circuit 1101

Interface 1102

FIG. 11

# EP 4 718 794 A1

## INTERNATIONAL SEARCH REPORT

International application No.

**PCT/CN2024/102756**

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, VEN, DWPI, CNKI, USTXT, WOTXT, EPTXT, 3GPP: 物理层协议数据单元, PPDU, 指示, 标志, 标识, 调制, 方式, 比特数, 差, 编码, 码率, 集合, indicat+, sign+, modulat+, way, manner, mode, bit, number, encoded, code rate, set

### C. DOCUMENTS CONSIDERED TO BE RELEVANT

| Category* | Citation of document, with indication, where appropriate, of the relevant passages | Relevant to claim No. |
|---|---|---|
| A | CN 114430278 A (HUAWEI TECHNOLOGIES CO., LTD.) 03 May 2022 (2022-05-03) entire document | 1-50 |
| A | CN 113875177 A (HUAWEI TECHNOLOGIES CO., LTD.) 31 December 2021 (2021-12-31) entire document | 1-50 |
| A | CN 113287266 A (HUAWEI TECHNOLOGIES CO., LTD.) 20 August 2021 (2021-08-20) entire document | 1-50 |
| A | US 2018035183 A1 (ELECTRONICS AND TELECOMMUNICATIONS RESEARCH INSTITUTE) 01 February 2018 (2018-02-01) entire document | 1-50 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 September 2024** | **10 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/102756**

| Patent document cited in search report | | | Publication date (day/month/year) | Patent family member(s) | | | Publication date (day/month/year) |
|---|---|---|---|---|---|---|---|
| CN | 114430278 | A | 03 May 2022 | None | | | |
| CN | 113875177 | A | 31 December 2021 | US | 2022077875 | A1 | 10 March 2022 |
| | | | | US | 2022077958 | A1 | 10 March 2022 |
| | | | | BR | 112021022737 | A2 | 15 February 2022 |
| | | | | CA | 3178909 | A1 | 19 November 2020 |
| | | | | WO | 2020227976 | A1 | 19 November 2020 |
| | | | | CA | 3177569 | A1 | 19 November 2020 |
| | | | | JP | 2022533326 | A | 22 July 2022 |
| | | | | EP | 3965325 | A1 | 09 March 2022 |
| | | | | EP | 3965325 | A4 | 26 October 2022 |
| | | | | JP | 2022533081 | A | 21 July 2022 |
| | | | | JP | 7424724 | B2 | 30 January 2024 |
| | | | | BR | 112021022883 | A2 | 04 January 2022 |
| | | | | EP | 3958485 | A1 | 23 February 2022 |
| | | | | EP | 3958485 | A4 | 23 March 2022 |
| | | | | WO | 2020228126 | A1 | 19 November 2020 |
| CN | 113287266 | A | 20 August 2021 | None | | | |
| US | 2018035183 | A1 | 01 February 2018 | KR | 20180012143 | A | 05 February 2018 |
| | | | | KR | 102017883 | B1 | 03 September 2019 |
| | | | | US | 10110979 | B2 | 23 October 2018 |

Form PCT/ISA/210 (patent family annex) (July 2022)

**REFERENCES CITED IN THE DESCRIPTION**

**Patent documents cited in the description**

- CN 202310835653